# EUROPÄISCHE PATENTSCHRIFT

(11) **EP 4 572 239 B1**
(45) Veröffentlichungstag und Bekanntmachung des Hinweises auf die Patenterteilung: **24.06.2026**
(21) Anmeldenummer: 24210714.2
(22) Anmeldetag: 05.11.2024
(51) Int. Cl.: H04L 12/40

(54) **TEILNEHMERSTATION FÜR EIN SERIELLES BUSSYSTEM UND VERFAHREN ZUR KOMMUNIKATION MIT DIFFERENTIELLEN SIGNALEN IN EINEM SERIELLEN BUSSYSTEM**
SUBSCRIBER STATION FOR A SERIAL BUS SYSTEM AND METHOD FOR COMMUNICATING WITH DIFFERENTIAL SIGNALS IN A SERIAL BUS SYSTEM
STATION D'ABONNÉ POUR UN SYSTÈME DE BUS SÉRIE ET PROCÉDÉ DE COMMUNICATION AVEC DES SIGNAUX DIFFÉRENTIELS DANS UN SYSTÈME DE BUS SÉRIE

(30) Priorität: 13.12.2023 DE 102023212612
(43) Veröffentlichungstag der Anmeldung: 18.06.2025
(73) Patentinhaber: Robert Bosch GmbH, 70442 Stuttgart (DE)
(72) Erfinder: Walker, Steffen, 72770 Reutlingen (DE); Kaack, Rolf, 72770 Reutlingen (DE)

(56) Entgegenhaltungen:
- US-A1- 2010 237 246
- US-A1- 2011 054 721
- US-A1- 2021 119 442

## Beschreibung

Die vorliegende Erfindung betrifft eine Teilnehmerstation für ein serielles Bussystem und ein Verfahren zur Kommunikation mit differentiellen Signalen in einem seriellen Bussystem.

### Stand der Technik

Zur Kommunikation in seriellen Bussystemen mit differentiellen Signalen finden beispielsweise CAN-Bussysteme Verwendung. Derzeit werden für die Kommunikation zwischen Geräten in Fahrzeugen und/oder bei anderen technischen Einrichtungen Classical CAN und/oder CAN FD verwendet, die beide in dem internationalen Standard ISO11898-1:2015 standardisiert sind. Die Geräte bilden am Bus Teilnehmerstationen, die auch Knoten genannt werden. Jede Teilnehmerstation hat mindestens eine Sende-/Empfangseinrichtung die auch Transceiver genannt wird.

CAN FD wird derzeit oft mit 2 Mbit/s Daten-Bitrate und 500kbit/s Arbitrations-Bitrate eingesetzt. Sogenannte CAN SIC Sende-/Empfangseinrichtungen ermöglichen den Einsatz von CAN FD mit bis zu 8 Mbit/s. Für höhere Datenraten von derzeit bis zu 20 Mbit/s steht mittlerweile CAN XL zur Verfügung.

Derzeit wird bei CAN-Bussystemen für die Sende-/Empfangseinrichtungen (Transceiver) eine Spannungsquelle von Vcc = 5 V eingesetzt, um die unterschiedlichen Spannungspegel für differentielle Signale auf dem Bus zu erzeugen. Die Signale signalisieren seriell die auszutauschenden Daten.

Zur Kostensenkung wird überlegt, für die Sende-/Empfangseinrichtungen eine Spannungsquelle von Vcc = 3,3 V zu verwenden. Eine solche Absenkung der Versorgungsspannung wäre vorteilhaft, da die Spannung von 3,3 V in vielen heutigen Mikrocontrollern eingesetzt wird. Zudem können auch viele andere Bausteine mit dieser Spannung versorgt werden.

Problematisch ist jedoch, dass derzeit bereits eine Vielzahl von am CAN-Bus einsetzbaren Geräten mit einer Spannungsversorgung von 5 V vorhanden ist; siehe dazu auch die Offenbarung aus US 2011/054721 A1.

Daher bietet die Absenkung der Versorgungsspannung von 5 V auf 3,3 V nur dann den gewünschten Vorteil, wenn ein Mischbetrieb am Bus möglich ist.

Hierbei müssen 5V-Teilnehmerstationen (5V-Knoten) und 3,3V-Teilnehmerstationen (3,3V-Knoten) in beliebiger Anzahl gleichzeitig auf einem Bus kommunizieren können.

Dabei ist zu berücksichtigen, dass der heutige CAN-Bus aufgrund der differentiellen Signale CAN_H, CAN_L im Mittel eine Spannung von Vcc/2, also 2,5 V hat. Diese wird erreicht, indem jede Busteilnehmerstation über ein genormtes Widerstands-Netzwerk mittels einer Stromquelle versucht, den Bus mehr oder weniger genau auf 2,5 V zu halten. Die Busspannung folgt im Wesentlichen der Knotenspannung (Spannung an der Teilnehmerstation), die am niedrigsten ist, liegt also typischerweise leicht unter 2,5 V.

Beim Senden kann eine CAN-Teilnehmerstation (Knoten), genauer ihre Sende-/Empfangseinrichtung, zwischen einem dominanten Zustand und einem rezessivem Zustand schalten. Für den dominanten Zustand treibt sie den CAN_H-Pegel auf ca. 3,5 V (Vcc - Diodenspannung - Verluste) und den CAN_L-Pegel auf ca. 1,5 V (Diodenspannung über GND). Die Differenz zwischen CAN_H-Pegel und CAN_L-Pegel liegt dann in einem Bereich von 2 V. Von dem internationalen Standard ISO11898-1:2015 sind minimal 1,5 V gefordert. Der Übergang vom rezessiven in den dominanten Zustand oder zurück erfolgt dabei möglichst symmetrisch um die virtuelle Null-Linie, die bei Vcc/2 liegt. Dadurch bleibt die Summe der Pegel von CAN_H und CAN_L möglichst bei 5 V.

Ein großes Problem liegt darin, dass kleinere Abweichungen im mV-Bereich bereits deutliche elektromagnetische Emissionen zur Folge haben, die EMV-Störungen (EMV = elektromagnetische Verträglichkeit) anderer elektrischer Geräte hervorrufen. Daher existieren Vorgaben für maximal zulässige elektromagnetische Emissionen, die von jeder Sende-/Empfangseinrichtung (Transceiver) zu erfüllen sind. Jedoch stellen diese Anforderungen an die elektromagnetische Emissionen eine sehr große Herausforderung dar.

Die Herausforderungen sind im Mischbetrieb umso größer, wenn auf dem Bus mindestens eine Teilnehmerstation mit einer Sende-/Empfangseinrichtung (Transceiver) vorhanden ist, die im dominanten Zustand andere Spannungspegel für CAN_H und CAN_L treibt als Sende-/Empfangseinrichtungen (Transceiver) anderer Teilnehmerstationen. Gründe dafür sind wie folgt.

Ein 3,3V-CAN-Bus funktioniert genauso wie der 5V-CAN-Bus, außer dass sich die Spannungen auf dem Bus unterscheiden. Ein 3,3V-Knoten (Teilnehmerstation) kann für den dominanten Zustand auf dem Bus das Signal CAN_H auf ca. 3V und das Signal CAN_L deutlich unter 1V bringen, indem schaltungstechnisch die Diodenspannung einer Diode der Sende-/Empfangseinrichtung (Transceiver) eliminiert wird. Dadurch kann auch bei einem 3,3V-CAN-Bussystem die spezifizierte minimale Pegeldifferenz von 1,5 V überschritten werden.

Eine Besonderheit beim Mischbetrieb ist, dass ein 5V-Knoten in der rezessiven Phase den Bus auf 2,5 V einstellt, während ein 3V-Knoten auf ca. 1,65 V am Bus zielt. Über eine Anhebung der CAN_L-Spannung bei 3,3V-CAN in Richtung 1V kann die Spannung im rezessiven Zustand auf ca. 1,9 V angehoben werden. Es bleibt aber eine Differenz von ca. 500-600mV zwischen den 5V- und 3,3V-Knoten bestehen. Der Bus nimmt in einer solchen Konfiguration eine Spannung irgendwo zwischen 1,9 V und 2,5 V ein und es fließt ständig ein Strom Richtung 3,3V-Knoten, der aber im Bereich weniger Mikroampere liegt.

Fängt nun allerdings eine Teilnehmerstation (Knoten) an zu senden und geht in den dominanten Zustand, so nimmt die Teilnehmerstation (Knoten) das nicht von "ihrer" Null-Linie aus vor, sondern von der des Mischbetriebs. Als Folge ändert sich die Summe der Pegel von CAN_H und CAN_L beim Umschalten, und erneut beim Zurückschalten.

Dies führt absehbar zu hohen EMV-Emissionen. Somit ist ein Mischbetrieb nicht so einfach möglich.

### Offenbarung der Erfindung

Daher ist es Aufgabe der vorliegenden Erfindung, eine Teilnehmerstation für ein serielles Bussystem und ein Verfahren zur Kommunikation mit differentiellen Signalen in einem seriellen Bussystem bereitzustellen, welche die zuvor genannten Probleme lösen. Insbesondere sollen eine Teilnehmerstation für ein serielles Bussystem und ein Verfahren zur Kommunikation mit differentiellen Signalen in einem seriellen Bussystem bereitgestellt werden, die möglichst unaufwändig und somit kostengünstig eine zuverlässige und möglichst fehlerfreie und emissionsarme Kommunikation an einem Bus ermöglichen, an dem auch Teilnehmerstationen angeschlossen sind, deren Sende-/Empfangseinrichtungen ausgestaltet sind, andere Spannungspegel auf dem Bus zu erzeugen als die Teilnehmerstation.

Die Aufgabe wird durch eine Teilnehmerstation für ein serielles Bussystem mit den Merkmalen von Anspruch 1 gelöst. Die Teilnehmerstation hat eine Sende-/Empfangseinrichtung zum Senden eines digitalen Sendesignals als analoges differentielles Signal auf einen Bus des Bussystems hat, um an mindestens eine andere Teilnehmerstation des Bussystems eine Nachricht zu senden, und/oder zum Empfangen eines analogen Signals von dem Bus, einem Schaltmodul zum Abschalten einer Busvorspannung für den Bus während einer vorbestimmten Erfassungszeitdauer, einem Busspannung-Erfassungsmodul zur Erfassung der von der Sende-/Empfangseinrichtung von dem Bus empfangenen Busspannung während der vorbestimmten Erfassungszeitdauer, und einem Busspannung-Einstellmodul zum Einstellen der Busvorspannung auf einen Spannungswert, der sich aus einer von dem Busspannung-Erfassungsmodul während der vorbestimmten Erfassungszeitdauer durchgeführten Erfassung ergibt.

Damit löst die beschriebene Teilnehmerstation das Problem, dass vor allem die herkömmlichen Teilnehmerstationen von deren Konzeption her keine fremden Spannungspegel am Bus erwarten. Die zuvor beschriebene Teilnehmerstation ist, im Unterschied zu herkömmlichen Teilnehmerstationen, abwärtskompatibel und ermöglicht die Kommunikation am selben Bus mit unterschiedlichen Spannungspegeln.

Die beschriebene Teilnehmerstation (Knoten) stellt sicher, dass die Null-Linie vor dem Senden eines dominanten Zustands auf den Pegel gebracht werden, den die zugehörige Teilnehmerstation benötigt. Dieser Pegel liegt bei ca. 1,9 V für eine 3,3V-Teilnehmerstation und bei ca. 2,5 V für eine 5V- Teilnehmerstation. Selbstverständlich gilt dies nicht nur für die Null-Linie vor dem Senden eines dominanten Zustands, sondern auch zwischen solchen Zuständen. Dadurch können die Emissionen, welche die Probleme in Bezug auf die elektromagnetische Verträglichkeit (EMV) erzeugen, in der Phase deutlich reduziert und bestenfalls minimiert werden, in der die Teilnehmerstation, genauer ihre Sende-/Empfangseinrichtung, sendet.

Die beschriebene Ausgestaltung der Teilnehmerstation ist vor allem während der Arbitrationsphase von Vorteil, in der die Teilnehmerstationen miteinander aushandeln, welche der Teilnehmerstationen in der folgenden Datenphase einen exklusiven Zugriff auf den Bus hat und somit Ihre Nachricht senden darf. Grund dafür ist, dass während der Arbitrationsphase ohnehin großes Durcheinander herrscht, da hier alle sendewilligen Teilnehmerstationen im dominanten Zustand sind. Die beschriebene Sende-/Empfangseinrichtung stellt sicher, dass sie den Bus-Pegel ohne zu großen Spannungssprung, also "weich", auf den von ihr gewünschten Pegel überleitet, wenn sie am Ende der Arbitrationsphase erkennt, dass sie senden darf. Dasselbe gilt nach dem Senden in der Datenphase, wenn die beschriebene Sende-/Empfangseinrichtung wieder von der Datenphase in die Arbitrationsphase zurückschaltet.

Auf diese Weise ermöglicht die beschriebene Teilnehmerstation einen Mischbetrieb von Teilnehmerstationen mit unterschiedlichen Spannungen, insbesondere von 3,3V-Teilnehmerstationen und 5V-Teilnehmerstationen. Dadurch kann die Teilnehmerstation eine Kostenersparnis für das Bussystem bieten und dabei dennoch einen emissionsarmen und fehlerfreien Betrieb des Bussystems ermöglichen.

Als Folge davon ist die beschriebene Teilnehmerstation äußerst ressourcenschonend und kostengünstig.

Insgesamt kann die beschriebene Teilnehmerstation dadurch selbst in dem beschriebenen Mischbetrieb nicht nur die Kommunikation im Bussystem zwischen anderen Teilnehmerstationen mit den für den jeweiligen Kommunikationsstandard geforderten (hohen) Bitraten realisieren, sondern ist auch derart ausgestaltet, dass die übertragbare Bitrate nicht durch Fehler in der Kommunikation herabgesetzt wird.

Vorteilhafte weitere Ausgestaltungen der Teilnehmerstation sind in den abhängigen Ansprüchen beschrieben.

Die Teilnehmerstation hat möglicherweise einen Erfassungsmodul-Steuerblock zum Steuern des Busspannung-Erfassungsmoduls derart, dass während der vorbestimmten Erfassungszeitdauer auf dem Bus ein rezessiver Zustand herrscht, der von einem dominanten Zustand auf dem Bus überschreibbar ist.

Die Teilnehmerstation hat möglicherweise einen Erfassungsmodul-Steuerblock zum Steuern des Busspannung-Erfassungsmoduls derart, dass während der vorbestimmten Erfassungszeitdauer auf dem Bus ein Übergang von einem dominanten Zustand in einen rezessiven Zustand stattfindet, der von einem dominanten Zustand auf dem Bus überschreibbar ist, wobei der Übergang von dem dominanten Zustand in einen rezessiven Zustand insbesondere ein SIC-Zustand ist.

Die Teilnehmerstation hat möglicherweise einen Erfassungsmodul-Steuerblock zum Steuern des Busspannung-Erfassungsmoduls derart, dass während der vorbestimmten Erfassungszeitdauer das Ende der Arbitrationsphase stattfindet und ein dominanter Zustand auf dem Bus herrscht.

Denkbar ist, dass das Busspannung-Erfassungsmodul zudem einen Schalter und ein Speicherelement aufweist, wobei der Erfassungsmodul-Steuerblock ausgestaltet ist, den Schalter zum Verbinden des Speicherelements mit dem Bus zu steuern, um die von der Sende-/Empfangseinrichtung von dem Bus empfangene Busspannung zu erfassen.

Die zuvor beschriebene Teilnehmerstation kann zudem ein Busspannung-Bereitstellmodul zum Bereitstellen von zwei unterschiedlichen Busvorspannungen aufweisen, wobei das Busspannung-Einstellmodul ausgestaltet ist, auf der Grundlage der von dem Busspannung-Erfassungsmodul während der vorbestimmten Erfassungszeitdauer erfassten Busspannung, eine der zwei unterschiedlichen Busvorspannungen für die Sende-/Empfangseinrichtung einzustellen.

Optional weist das Busspannung-Bereitstellmodul einen Spannungsteiler mit sechs Widerständen zum Bereitstellen der zwei unterschiedlichen Busvorspannungen auf.

Optional weist das Busspannung-Bereitstellmodul einen Halbleiter mit drei Bandlückenableitungen zum Bereitstellen der zwei unterschiedlichen Busvorspannungen auf.

Das Busspannung-Einstellmodul kann einen Umschalter und einen Einstellmodul-Steuerblock aufweisen zum Steuern der Stellung des Umschalters auf der Grundlage der von dem Busspannung-Erfassungsmodul während der vorbestimmten Erfassungszeitdauer erfassten Busspannung.

Möglicherweise ist die zuvor beschriebene Teilnehmerstation ausgestaltet, während einer ersten Kommunikationsphase mit den anderen Teilnehmerstationen des Bussystems auszuhandeln, welche der Teilnehmerstationen in der folgenden zweiten Kommunikationsphase einen exklusiven Zugriff auf den Bus hat und somit Ihre Nachricht senden darf.

Die Sende-/Empfangseinrichtung kann ausgestaltet sein, das analoge differentielle Signal in einer ersten Kommunikationsphase der Nachricht mit einem anderen Physical Layer zu erzeugen als in einer zweiten Kommunikationsphase.

In einer Ausgestaltung hat die zuvor beschriebene Teilnehmerstation zudem ein Ereignis-Erfassungsmodul zur Erfassung eines Ereignisses, nach welchem das Busspannung-Erfassungsmodul eine Erfassung der auf dem Bus vorliegenden Busspannung vorzunehmen hat, wobei der Erfassungsmodul-Steuerblock ausgestaltet ist, das Busspannung-Erfassungsmodul zum Erfassen der auf dem Bus vorliegenden Busspannung während der vorbestimmten Erfassungszeitdauer anzusteuern, nachdem das Ereignis-Erfassungsmodul das Ereignis erfasst hat.

Hierbei kann das Ereignis eine vorbestimmte Anzahl von direkt aufeinanderfolgenden rezessiven Bits am Ende eines für die Nachricht über den Bus gesendeten Rahmens sein.

Das Ereignis kann sein, dass am Ende der ersten Kommunikationsphase die Teilnehmerstation ermittelt ist, die in der folgenden zweiten Kommunikationsphase den exklusiven Zugriff auf den Bus hat und somit ihre Nachricht senden darf.

Möglicherweise hat die zuvor beschriebene Teilnehmerstation zudem ein Busspannung-Haltemodul zum Halten der von dem Busspannung-Erfassungsmodul auf dem Bus erfassten Busspannung, und
optional zudem mit einem Speicherelement, das zwischen dem Busspannung-Haltemodul und dem Busspannung-Einstellmodul zum Speichern einer Spannung am Ausgang des Busspannung-Erfassungsmoduls angeordnet ist.

Die zuvor beschriebene Teilnehmerstation kann zudem einen Busspannungs-Treiber zum Treiben der von dem Busspannung-Einstellmodul eingestellten Busvorspannung für die Sende-/Empfangseinrichtung auf den Bus haben.

In einer Ausgestaltung hat die zuvor beschriebene Teilnehmerstation zudem eine Kommunikationssteuereinrichtung zum Steuern der Kommunikation in dem Bussystem und zur Erzeugung des Sendesignals, wobei die Teilnehmerstation für die Kommunikation in einem Bussystem ausgestaltet ist, in dem zumindest zeitweise ein exklusiver, kollisionsfreier Zugriff einer Teilnehmerstation auf den Bus des Bussystems gewährleistet ist.

Mindestens eine zuvor beschriebene Teilnehmerstation kann Teil eines Bussystems sein, das zudem einen Bus hat und bei dem mindestens zwei Teilnehmerstationen über den Bus derart miteinander verbunden sind, dass sie seriell miteinander kommunizieren können.

Die zuvor genannte Aufgabe wird zudem durch ein Verfahren zur Kommunikation mit differentiellen Signalen in einem seriellen Bussystem mit den Merkmalen von Anspruch 19 gelöst. Das Verfahren wird mit einer Teilnehmerstation des Bussystems ausgeführt, die eine Sende-/Empfangseinrichtung zum Senden eines digitalen Sendesignals als analoges differentielles Signal auf einen Bus des Bussystems hat, um an mindestens eine andere Teilnehmerstation des Bussystems eine Nachricht zu senden, und/oder zum Empfangen eines analogen Signals von dem Bus, wobei das Verfahren die Schritte aufweist Abschalten, mit einem Schaltmodul, einer Busvorspannung für den Bus während einer vorbestimmten Erfassungszeitdauer, Erfassen, mit einem Busspannung-Erfassungsmodul, der von der Sende-/Empfangseinrichtung von dem Bus empfangenen Busspannung während der vorbestimmten Erfassungszeitdauer, und Einstellen, mit einem Busspannung-Einstellmodul, der Busvorspannung auf einen Spannungswert, der sich aus einer von dem Busspannung-Erfassungsmodul während der vorbestimmten Erfassungszeitdauer durchgeführten Erfassung ergibt.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispiel(en) näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer ersten Teilnehmerstation des Bussystems gemäß dem ersten Ausführungsbeispiel gesendet werden kann;
Fig. 3 einen zeitlichen Verlauf eines digitalen Sendesignals im Betrieb des Bussystems bei der ersten und/oder zweiten Teilnehmerstation, welche mit mindestens einer ersten Teilnehmerstation an denselben Bus des Bussystems angeschlossen ist;
Fig. 4 einen zeitlichen Verlauf von Bussignalen CAN_H und CAN_L bei der zweiten Teilnehmerstation gemäß dem ersten Ausführungsbeispiel;
Fig. 5 einen zeitlichen Verlauf einer Differenzspannung VDIFF der Bussignale CAN_H und CAN_L bei der ersten und zweiten Teilnehmerstation gemäß dem ersten Ausführungsbeispiel;
Fig. 6 einen zeitlichen Verlauf eines digitalen Empfangssignals, das die erste oder zweite Teilnehmerstation aus einem von dem Bus empfangenen Signal erzeugt, das auf dem Sendesignal von Fig. 3 basiert;
Fig. 7 einen zeitlichen Verlauf von Bussignalen CAN_H und CAN_L, die von der ersten Teilnehmerstation gemäß dem ersten Ausführungsbeispiel ausgehend von dem Sendesignal von Fig. 3 auf dem Bus erzeugbar sind;
Fig. 8 ein Beispiel für einen zeitlichen Verlauf eines digitalen Sendesignals, welches in einer Arbitrationsphase (SIC-Betriebsart eines Sendemoduls) in Bussignale CAN_H, CAN_L für einen Bus des Bussystems von Fig. 1 umgesetzt werden soll;
Fig. 9 den zeitlichen Verlauf der Bussignale CAN_H, CAN_L beim Wechsel zwischen einem rezessiven Buszustand zu einem dominanten Buszustand und zurück zu dem rezessiven Buszustand, die in der Arbitrationsphase (SIC-Betriebsart) aufgrund des Sendesignals von Fig. 8 auf den Bus gesendet werden;
Fig. 10 ein Schaltbild einer Teilnehmerstation des Bussystems gemäß dem ersten Ausführungsbeispiel;
Fig. 11 ein Schaltbild einer Teilnehmerstation des Bussystems gemäß einem zweiten Ausführungsbeispiel; und
Fig. 12 ein Schaltbild einer Teilnehmerstation des Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

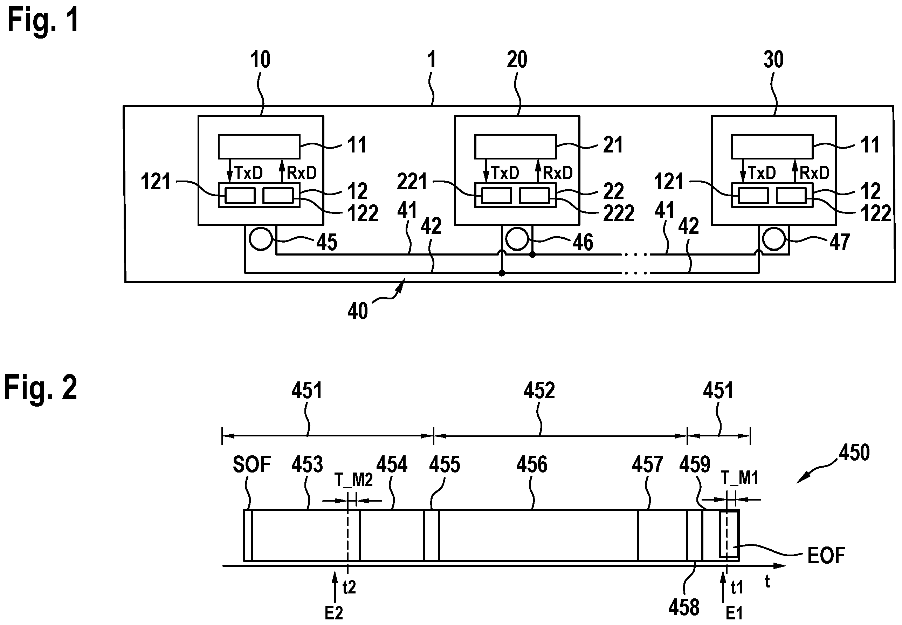

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

Auch wenn das Bussystem 1 nachfolgend anhand von CAN-Bussystemen beschrieben ist, ist das Bussystem 1 jedoch nicht auf CAN-Bussysteme beschränkt.

In Fig. 1 hat das Bussystem 1 eine Vielzahl von Teilnehmerstationen 10, 20, 30, die jeweils an einen Bus 40 oder Busleitung mit einer ersten Busader 41 und einer zweiten Busader 42 angeschlossen sind. Die Busadern 41, 42 können bei einem CAN-Bussystem auch CANH und CANL zum Leiten von Signalen CAN_H, CAN_L auf dem Bus 40 genannt werden.

Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 sind beispielsweise Steuergeräte oder Anzeigevorrichtungen eines Kraftfahrzeugs.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtung 12 hat ein Sendemodul 121 und ein Empfangsmodul 122. Mindestens eine der Teilnehmerstationen 10, 20, 30 verwendet eine Versorgungsspannung von 3,3 V und mindestens eine Teilnehmerstation 10, 20, 30 verwendet eine Versorgungsspannung von 5V. Zur Illustration zeigen die folgenden Ausführungen ein Beispiel für ein Netzwerk oder Bussystem 1, bei dem die Teilnehmerstation 20 eine Versorgungsspannung von 5V hat und die Teilnehmerstationen 10 und 30 eine von 3,3V haben. Andere Konstellationen sind ebenfalls denkbar.

Die Teilnehmerstation 20 hat eine Kommunikationssteuereinrichtung 21 und eine Sende-/Empfangseinrichtung 22. Die Sende-/Empfangseinrichtung 22 hat ein Sendemodul 221 und ein Empfangsmodul 222.

Die Sende-/Empfangseinrichtungen 12 der Teilnehmerstationen 10, 30 und die Sende-/Empfangseinrichtung 22 der Teilnehmerstation 20 sind jeweils direkt an den Bus 40 angeschlossen, auch wenn dies in Fig. 1 nicht dargestellt ist.

Die Kommunikationssteuereinrichtungen 11, 21 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

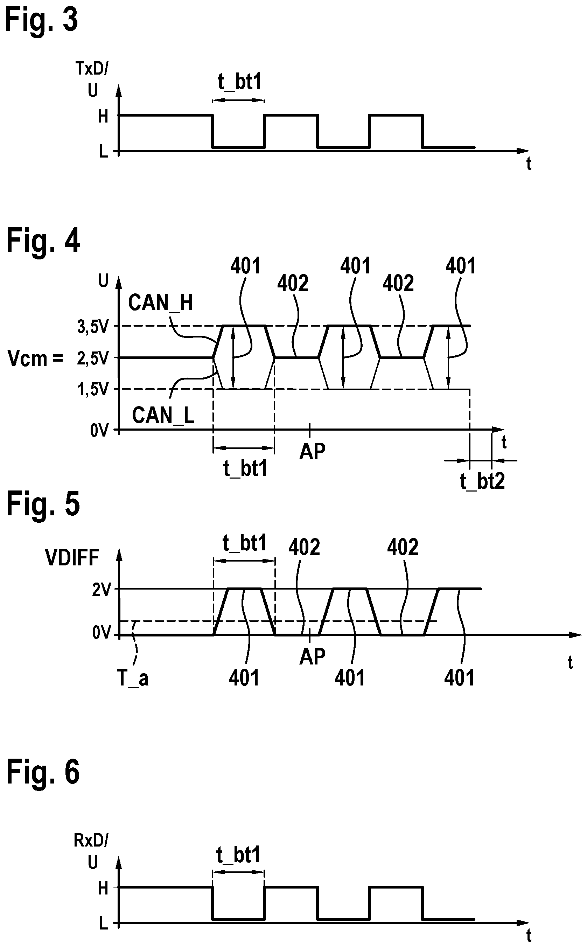

Die Kommunikationssteuereinrichtung 11 erstellt und liest erste Nachrichten 45, 47, die beispielsweise modifizierte CAN Nachrichten 45, 47 sind. Hierbei sind die modifizierten CAN Nachrichten 45, 47 insbesondere auf der Grundlage des CAN XL-Formats aufgebaut. Die Sende-/Empfangseinrichtung 12 dient zum Senden und Empfangen der Nachrichten 45, 47 von dem Bus 40. Das Sendemodul 121 empfängt ein von der Kommunikationssteuereinrichtung 11 für eine der Nachrichten 45, 47 erstelltes digitales Sendesignal TxD und setzt dieses in Signale auf den Bus 40 um, wie in Bezug auf Fig. 3, Fig. 4 und Fig. 7 genauer beschrieben. Das digitale Sendesignal TxD kann zumindest zeitweise bzw. abschnittsweise ein pulsweiten-moduliertes Signal sein. Das Empfangsmodul 122 empfängt auf dem Bus 40 gesendete Signale entsprechend den Nachrichten 45 bis 47 und erzeugt daraus ein digitales Empfangssignal RxD, für welches ein Beispiel in Fig. 6 gezeigt ist. Das Empfangsmodul 122 sendet das Empfangssignal RxD an die Kommunikationssteuereinrichtung 11.

Zusätzlich kann die Kommunikationssteuereinrichtung 11 optional zum Erstellen und Lesen von zweiten Nachrichten 46 ausgestaltet sein, die beispielsweise CAN FD-Nachrichten oder CAN SIC-Nachrichten 46 sind. Die Sende-/Empfangseinrichtung 12 kann entsprechend ausgestaltet sein.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller oder ein CAN SIC Controller. Die Kommunikationssteuereinrichtung 21 erstellt und liest zweite Nachrichten 46, beispielsweise CAN FD- Nachrichten oder CAN SIC-Nachrichten. Die Sende-/Empfangseinrichtung 22 dient zum Senden und Empfangen der Nachrichten 46 von dem Bus 40. Das Sendemodul 221 empfängt ein von der Kommunikationssteuereinrichtung 21 erstelltes digitales Sendesignal TxD und setzt dieses in Signale für eine Nachricht 46 auf den Bus 40 um, wie in Bezug auf Fig. 3 und Fig. 4 genauer beschrieben. Das Empfangsmodul 222 empfängt auf dem Bus 40 gesendete Signale entsprechend den Nachrichten 45 bis 47 und erzeugt daraus ein digitales Empfangssignal RxD, für welches ein Beispiel in Fig. 6 gezeigt ist. Die Sende-/Empfangseinrichtung 22 ist möglicherweise wie ein herkömmlicher CAN FD- Transceiver oder CAN-SIC-Transceiver ausgeführt.

Zum Senden der Nachrichten 45, 46, 47 mit CAN SIC oder CAN XL werden bewährte Eigenschaften übernommen, die für die Robustheit und Anwenderfreundlichkeit von CAN und CAN FD verantwortlich sind, insbesondere Rahmenstruktur mit Identifier und Arbitrierung nach dem bekannten CSMA/CR-Verfahren, wie nachfolgend noch genauer beschrieben.

Mit den beiden Teilnehmerstationen 10, 30 ist eine Bildung und dann Übertragung von Nachrichten 45, 46, 47 mit verschiedenen CAN-Formaten, insbesondere dem CAN FD Format oder dem CAN SIC Format oder dem CAN XL Format, sowie der Empfang solcher Nachrichten 45, 46, 47 realisierbar. Dies ist nachfolgend für eine Nachricht 45 genauer beschrieben.

Fig. 2 zeigt für die Nachricht 45 einen Rahmen 450, der insbesondere ein CAN XL Rahmen ist, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD. Alternativ ist der Rahmen 450 kompatibel zu einem beliebigen Nachfolgestandard für CAN FD.

Gemäß Fig. 2 ist der Rahmen 450 für die CAN-Kommunikation auf dem Bus 40 in unterschiedliche Kommunikationsphasen 451, 452 unterteilt, nämlich eine Arbitrationsphase 451 (erste Kommunikationsphase) und eine Datenphase 452 (zweite Kommunikationsphase). Der Rahmen 450 hat, nach einem Startbit SOF, ein Arbitrationsfeld 453, ein Steuerfeld 454, ein erstes Umschaltfeld 455, ein Datenfeld 456, ein Prüfsummenfeld 457, ein zweites Umschaltfeld 458 und ein Rahmenabschlussfeld 459, in dem eine Markierung EOF (EOF = End of Frame) vorhanden ist. Das Prüfsummenfeld 457, das zweite Umschaltfeld 458 und das Rahmenabschlussfeld 459 bilden eine Rahmenendphase 457, 458, 459 des Rahmens 450. In dem Rahmenabschlussfeld 459 kann ein Bestätigungsfeld (ACK= Acknowledge) vorhanden sein, das in den Figuren nicht gezeigt ist.

Im Unterschied zu dem Rahmen 450 von Fig. 2 sind in einem CAN FD Rahmen, welchen die Teilnehmerstation 20 für die zweite Nachricht 46 verwendet, keine Umschaltfelder 455, 458 vorhanden.

Für alle zuvor genannten CAN-Versionen gilt, dass in der Arbitrationsphase 451 mit Hilfe eines Identifizierers (ID) in dem Arbitrationsfeld 453 bitweise zwischen den Teilnehmerstationen 10, 20, 30 ausgehandelt wird, welche Teilnehmerstation 10, 20, 30 die Nachricht 45, 46, 47 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Während der Phase 451 findet das bekannte CSMA/CR-Verfahren Verwendung, welches gleichzeitigen Zugriff der Teilnehmerstationen 10, 20, 30 auf den Bus 40 erlaubt, ohne dass die höher priorisierte Nachricht 45, 46, 47 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Pegeln oder dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

Am Ende der Arbitrationsphase 451 wird in die Datenphase 452 umgeschaltet. Bei CAN XL erfolgt die Umschaltung mit Hilfe des ersten Umschaltfelds 455 von Fig. 2.

In der Datenphase 452 werden bei CAN XL neben einem Teil des ersten Umschaltfelds 455 die Nutzdaten des CAN-XL-Rahmens 450 bzw. der Nachricht 45 aus dem Datenfeld 456 sowie das Prüfsummenfeld 457 und ein Teil des zweiten Umschaltfelds 458 gesendet. Bei CAN FD werden die Nutzdaten des CAN-FD-Rahmens bzw. der Nachricht 46 aus dem Datenfeld 456 sowie das Prüfsummenfeld 457 gesendet.

Am Ende der Datenphase 452 wird wieder in die Arbitrationsphase 451 zurückgeschaltet. Bei CAN XL erfolgt die Umschaltung mit Hilfe des zweiten Umschaltfelds 458 von Fig. 2.

Ein Sender der Nachricht 45 beginnt ein Senden von Bits der Datenphase 452 auf den Bus 40 nur bzw. erst dann, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

In dem Rahmenendefeld EOF ist eine Bitsequenz vorgesehen, welche das Ende des Rahmens 450 markiert. Damit dient die Bitsequenz des Endefelds (EOF) dazu, das Ende des Rahmens 450 zu kennzeichnen. Das Endefeld (EOF) sorgt dafür, dass am Ende des Rahmens 450 eine Anzahl von 7 rezessiven Bits gesendet wird. Zusammen mit einem optional vorhandenen ACK Delimiter in dem nicht gezeigten Bestätigungsfeld wird am Ende des Rahmens 450 eine Anzahl von 8 rezessiven Bits gesendet. Die genannte Bitfolge von rezessiven Bits sind Bitfolgen, die innerhalb des Rahmens 450 nicht auftreten können. Dadurch kann von den Teilnehmerstationen 10, 30 das Ende des Rahmens 450 sicher erkannt werden.

Die Teilnehmerstation 10 führt ab einem Zeitpunkt oder einer Zeit t1, genauer beginnend mit der Zeit t1, für eine Zeitdauer T_M1 eine Erfassung des Buspotentials bzw. der Busspannung durch, das auf dem Bus 40 vorliegt. Die Erfassung wird durchgeführt, nachdem ein Ereignis E1 aufgetreten ist. Das Ereignis E1 ist, dass eine vorbestimmte Anzahl von direkt aufeinanderfolgenden rezessiven Bits am Ende des Rahmens 450, genauer im Endefeld (EOF), aufgetreten ist.

Optional kann die Teilnehmerstation ab einer Zeit t2, genauer beginnend mit der Zeit t2, für eine Zeitdauer T_M2 eine Erfassung des Buspotentials bzw. der Busspannung durchführen, das auf dem Bus 40 vorliegt. Die Erfassung wird durchgeführt, nachdem ein Ereignis E2 aufgetreten ist. Das Ereignis E2 ist, dass am Ende der ersten Kommunikationsphase die Teilnehmerstation ermittelt ist, die in der folgenden zweiten Kommunikationsphase den exklusiven Zugriff auf den Bus hat und somit Ihre Nachricht senden darf.

Diese Erfassung(en) oder Messung(en) sind anhand der Figuren nachfolgend beschrieben.

Nach dem Endefeld (EOF), das 7 Bits hat, folgt in dem Rahmen 450 ein Zwischenrahmenabstand (IFS - Inter Frame Space), der in Fig. 2 nicht dargestellt ist. Dieser Zwischenrahmenabstand (IFS) ist bei CAN FD entsprechend der ISO11898-1:2015 ausgestaltet. Der Zwischenrahmenabstand (IFS - Inter Frame Space) hat mindestens 3 Bit.

Im Übrigen sind die genannten Felder und Bits aus der ISO11898-1:2015 bekannt und sind daher hier nicht näher beschrieben.

Somit verwenden die Teilnehmerstationen 10, 30 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Jedoch ist im Vergleich zu CAN oder CAN FD in der Datenphase 452 als zweiter Kommunikationsphase eine Steigerung der Netto-Datenübertragungsrate, insbesondere auf über 10 Megabit pro Sekunde möglich. Außerdem ist ein Anheben der Größe der Nutzdaten pro Rahmen, insbesondere auf etwa 2kbyte oder einen beliebigen anderen Wert möglich.

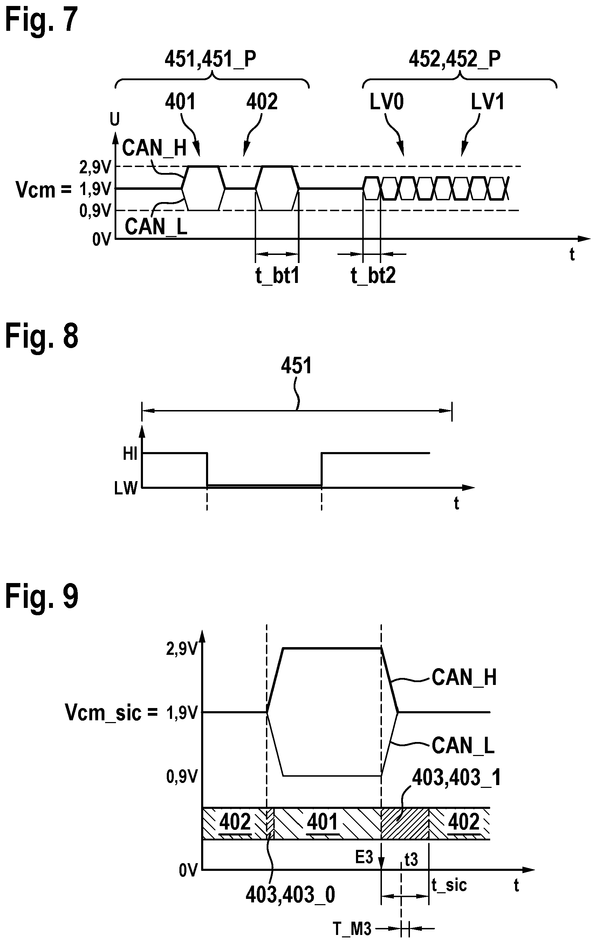

Fig. 3, Fig. 5 und Fig. 6 veranschaulichen als Beispiel die Signale, die im Betrieb des Bussystems 1 bei den Teilnehmerstationen 10, 20, 30 erzeugt werden. Fig. 4 veranschaulicht als Beispiel die Signale, die im Betrieb des Bussystems 1 von der Teilnehmerstation 20 auf den Bus 40 gesendet werden. Wie bereits erwähnt, verwendet die Teilnehmerstation 20 eine Versorgungsspannung von 5 V. Fig. 7 zeigt die Bussignale, welche jede der Teilnehmerstationen 10, 30 anstelle der Bussignale erzeugt, die in Fig. 4 gezeigt sind. Wie bereits erwähnt, verwenden die Teilnehmerstationen 10, 30 eine Versorgungsspannung von 3,3 V.

Im Betrieb des Bussystems 1 kann jedes der Sendemodule 121, 221 von Fig. 1 ein Sendesignal TxD der zugehörigen Kommunikationssteuereinrichtung 11 seriell in entsprechende Signale CAN_H, CAN_L für CAN oder CAN FD für die Busadern 41, 42 umsetzen und diese Signale an den Anschlüssen für CAN_H und CAN_L auf den Bus 40 senden. Die jeweilige Kommunikationssteuereinrichtung 11, 21 sendet das Sendesignal TxD von Fig. 3 über der Zeit t (seriell) an das zugehörige Sendemodul 121, 221, wie in Fig. 1 gezeigt.

Wie als Beispiel in Fig. 3 gezeigt, hat das Sendesignal TxD die Spannungszustände H (High = Hoch) und L (Low = Niedrig) mit einer entsprechenden Spannung U. Die einzelnen Bits des Signals TxD haben eine Bitzeit t_bt1, wie in Fig. 3 für die Arbitrationsphase 451 gezeigt. Bei CAN FD und CAN XL können die Bits des Signals TxD in der Datenphase 452 mit einer kürzeren Bitzeit t_bt2 gesendet werden, wie in Fig. 4 veranschaulicht.

Die Abfolge der Zustände H, L des Sendesignals TxD von Fig. 3 und der daraus resultierenden Zustände 401, 402 für die Signale CAN_H, CAN_L in Fig. 4 sowie der daraus resultierende Verlauf der Spannung VDIFF von Fig. 5 dient nur der Veranschaulichung der Funktion der Teilnehmerstation 10. Die Abfolge der Datenzustände für die Buszustände 401, 402 ist je nach Bedarf wählbar.

Gemäß dem Beispiel von Fig. 4 haben die Signale CAN_H und CAN_L zumindest in der Arbitrationsphase 451 die dominanten und rezessiven Buspegel oder Buszustände 401, 402, wie von CAN bekannt. Da die Teilnehmerstation 20 eine Versorgungsspannung von 5 V verwendet, treibt sie für den dominanten Zustand 401 den CAN_H-Pegel auf ca. 3,5 V und den CAN_L-Pegel auf ca. 1,5 V, wie in Fig. 4 gezeigt. Der rezessive Zustand 402 stellt sich bei 2,5 V ein, was gleich der Busmittenspannung Vcm = 2,5 V ist.

Wie in Fig. 5 für die Differenzspannung VDIFF = CAN_H - CAN_L auf dem Bus 40 gezeigt, liegt die Differenz zwischen CAN_H-Pegel und CAN_L-Pegel für den dominanten Zustand 401 dann in einem Bereich von 2 V.

Die Empfangsmodule 122, 222 bilden aus von dem Bus 40 empfangenen Signalen CAN_H und CAN_L, die in Fig. 4 gezeigt sind, bzw. der Differenzsspannung VDIFF von Fig. 5 ein Empfangssignal RxD. Für die Erzeugung des digitalen Empfangssignal RxD von Fig. 6 tastet das jeweilige Empfangsmodul 122, 222 das von dem Bus 40 empfangene Signal VDIFF oder mindestens eines der Signale CAN_H, CAN_L an Abtastpunkten AP gemäß Fig. 4 bzw. Fig. 5 ab, wie bekannt. Das Empfangssignal RxD ist in Fig. 6 ohne Laufzeitverzögerung gezeigt. Das Empfangsmodul 122 gibt dieses Empfangssignal RxD an die zugehörige Kommunikationssteuereinrichtung 11, 21 weiter, wie in Fig. 1 gezeigt.

Im Unterschied zu Fig. 4 zeigt Fig. 7 die Signale CAN_H und CAN_L, welche die Teilnehmerstationen 10, 30 in der Arbitrationsphase 451 und der Datenphase 452 auf dem Bus 40 erzeugen. Zumindest in der Arbitrationsphase 451 werden die dominanten und rezessiven Buspegel oder Buszustände 401, 402 verwendet, wie bereits in Fig. 4 gezeigt. Da die Teilnehmerstationen 10, 30 eine Versorgungsspannung von 3,3 V verwenden, treiben sie für den dominanten Zustand 401 den CAN_H-Pegel auf ca. 2,9 V und den CAN_L-Pegel auf ca. 0,9 V, wie in Fig. 7 gezeigt. Der rezessive Zustand 402 stellt sich bei 1,9 V ein, was gleich der Busmittenspannung Vcm = 1,9 V ist. In der Datenphase 452 ist bei CAN XL ein anderer Physical Layer 452_P verwendbar als der Physical Layer 451_P in der Arbitrationsphase 451. Demzufolge können die CAN_H-Pegel auf Werte für die Zustände LV1, LV0 getrieben werden, wie in Fig. 7 gezeigt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Das Sendemodul 121 erzeugt für das Sendesignal TxD von Fig. 3 die Signale CAN_H, CAN_L in Fig. 7 für die Busadern 41, 42 derart, dass sich der Zustand LV0 für einen Zustand LW (Niedrig = Low) ausbildet. Zudem bildet sich der Zustand LV1 für einen Zustand HI (Hoch = High) aus.

Um die Datenrate für CAN XL zu erhöhen, können die Sende-/Empgfangseinrichtungen 12 für CAN SIC ausgestaltet sein.

Wie in Fig. 8 und Fig. 9 genauer gezeigt, erzeugt das Sendemodul 121 bei CAN SIC für das Sendesignal TxD von Fig. 8 die Signale CAN_H, CAN_L gemäß Fig. 9 für die Busadern 41, 42 mit einer Busmittenspannung Vcm_sic = 1,9 V und derart, dass zusätzlich ein Zustand 403 (sic) vorhanden ist. Der Zustand 403 (SIC) kann unterschiedlich lang sein, wie mit dem Zustand 403_0 (sic) beim Übergang von dem Zustand 402 (rec) zu dem Zustand 401 (dom) gezeigt und dem Zustand 403_1 (sic) beim Übergang von dem Zustand 401 (dom) zu dem Zustand 402 (rec) gezeigt. Der Zustand 403_0 (sic) ist zeitlich kürzer als der Zustand 403_1 (sic). Um Signale gemäß Fig. 9 zu erzeugen, wird das Sendemodul 121 in eine SIC-Betriebsart (SIC-Mode) geschaltet.

Das Durchlaufen des kurzen sic-Zustands 403_0 ist in der CiA610-3 nicht gefordert und der Zustand ist abhängig von der Art der Implementierung. Die zeitliche Dauer des "langen" Zustands 403_1 (sic) ist für CAN-SIC als auch für die SIC-Betriebsart bei CAN-XL spezifiziert als t_sic < 530ns, beginnend mit der steigenden Flanke an dem Sendesignal TxD von Fig. 5.

Die Teilnehmerstation 10 führt ab einem Zeitpunkt oder einer Zeit t3, genauer beginnend mit der Zeit t3, nachdem ein Ereignis E3 aufgetreten ist, für eine Zeitdauer T_M3 eine Erfassung des Buspotentials bzw. der Busspannung durch, das/die auf dem Bus 40 vorliegt. Das Ereignis E3 ist, dass der Zustand 401 (dom) verlassen wird bzw. von dem Zustand 401 (dom) in den Zustand 403 (sic) geschaltet wird.

Das Sendemodul 121 soll in dem "langen" Zustand 403_1 (sic) die Impedanz zwischen den Busadern 41 (CANH) und 42 (CANL) möglichst gut an den charakteristischen Wellenwiderstand Zw der verwendeten Busleitung anpassen. Hierbei gilt Zw=100Ohm oder 120Ohm. Diese Anpassung verhindert Reflexionen und lässt somit den Betrieb bei höheren Bitraten zu. Zur Vereinfachung wird nachfolgend immer von dem Zustand 403 (sic) oder sic-Zustand 403 gesprochen.

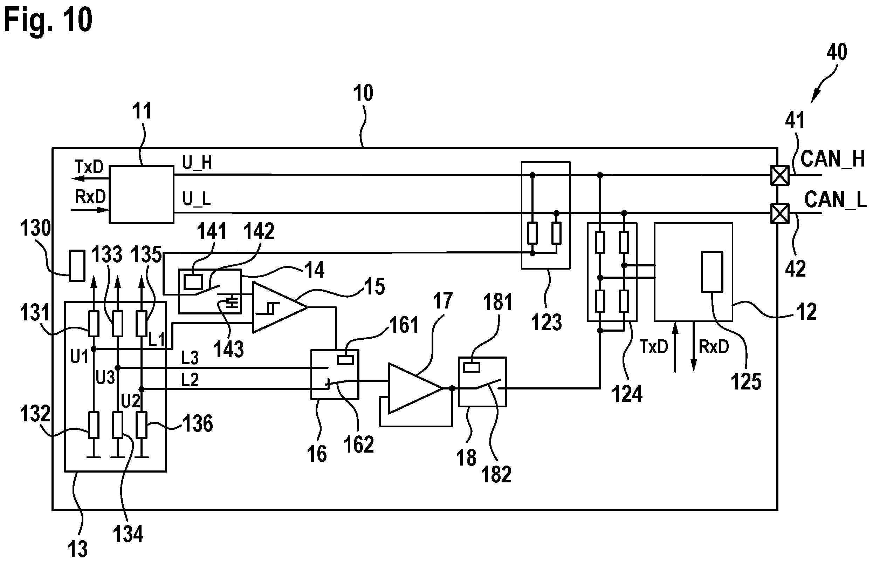

Fig. 10 zeigt die Teilnehmerstation 10 genauer, welche die Kommunikationssteuereinrichtung 11 und die Sende-/Empfangseinrichtung 12 aufweist, wie zuvor in Bezug auf Fig. 1 bereits beschrieben. Die Sende-/Empfangseinrichtung 12 gibt im Sendebetrieb der Teilnehmerstation 10 an ihrem Ausgang differentielle Spannungen U_H = 2,9 V und U_L = 0,9 V für die Signale CAN_H, CAN_L aus, wie zuvor in Bezug auf Fig. 7 beschrieben. Die Sende-/Empfangseinrichtung 12 kann ein Ereignis-Erfassungsmodul 125 zur Erfassung eines der in Fig. 2 und Fig. 9 gezeigten Ereignisse E1, E2, E3 aufweisen. Das Ereignis-Erfassungsmodul 125 kann insbesondere ein Zählwerk zum Auswerten des Empfangssignals RxD haben und/oder einen Timer zum Erfassen, ob eine vorbestimmte Zeit abgelaufen ist Die Teilnehmerstation 30 kann auf dieselbe Weise ausgestaltet sein wie die Teilnehmerstation 10. Daher ist die Teilnehmerstation 30 hier nicht separat beschrieben.

Gemäß Fig. 10 hat die Teilnehmerstation 10 eine elektrische Schaltung mit einem Busspannungs-Bereitstellmodul 13, einem Busspannung-Erfassungsmodul 14, einem Busspannung-Haltemodul 15, einem Busspannung-Einstellmodul 16, einem Busspannungs-Treiber 17, und einem Busvorspannungsmodul 18. Zudem hat die Teilnehmerstation 10 ein erstes Anschlussnetzwerk 123, ein zweites Anschlussnetzwerk 124 und eine elektrische Spannungsversorgung 130. Das erste Anschlussnetzwerk 123, das mindestens zwei Widerstände aufweisen kann, die in Fig. 10 nicht genauer bezeichnet sind, dient zum Anschluss des Erfassungsmoduls 14 an die Anschlüsse für die Signale CAN_H, CAN_L. Das zweite Anschlussnetzwerk 124, das mindestens vier Widerstände aufweisen kann, die in Fig. 10 nicht genauer bezeichnet sind, dient zum Anschluss der Sende-/Empfangseinrichtung 12 an die Anschlüsse für die Signale CAN_H, CAN_L. Die Spannungsversorgung 130 versorgt die Teilnehmerstation 10 mit einer elektrischen Spannung von 3,3 V.

Das Busspannungs-Bereitstellmodul 13 ist an einer Seite an die elektrische Spannungsversorgung 130 angeschlossen. Auf der anderen Seite ist das Busspannungs-Bereitstellmodul 13 an Masse, insbesondere CAN-GND, angeschlossen. Das Busspannungs-Bereitstellmodul 13 ist bei dem vorliegenden Ausführungsbeispiel als Spannungsteiler mit sechs Widerständen 131 bis 136 ausgeführt. Die Widerstände 131 bis 136 bilden Referenzspannungsquellen, wie folgt. Ein erster Widerstand 131 ist in Reihe zu einem zweiten Widerstand 132 geschaltet. Der zweite Widerstand 132 ist an Masse, insbesondere CAN-GND, angeschlossen. Zwischen den Widerstanden 131, 132 stellt sich im Betrieb der Teilnehmerstation 10 eine Spannung oder Potential von U1 = 2,1 V ein. Ein dritter Widerstand 133 ist in Reihe zu einem vierten Widerstand 134 geschaltet. Der vierte Widerstand 134 ist an Masse, insbesondere CAN-GND, angeschlossen. Zwischen den Widerstanden 133, 134 stellt sich im Betrieb der Teilnehmerstation 10 eine Spannung oder Potential von U3 = 2,5 V ein. Ein fünfter Widerstand 135 ist in Reihe zu einem sechsten Widerstand 136 geschaltet. Der sechste Widerstand 136 ist an Masse, insbesondere CAN-GND, angeschlossen. Zwischen den Widerstanden 135, 136 stellt sich im Betrieb der Teilnehmerstation 10 eine Spannung oder Potential von U2 = 1,9 V ein.

Die Widerstände 131 bis 136 stellen somit Referenzspannungen U1, U2, U3 für die Teilnehmerstation 10 bereit. Die Spannungen U2, U3 sind als unterschiedliche Busvorspannungen für den Bus 40 verwendbar. Bei Bedarf ist das Modul 130 ausgestaltet, mehr als zwei unterschiedliche Busvorspannungen für den Bus 40 bereitzustellen, insbesondere unter Verwendung von mehr als sechs Widerständen 131 bis 136.

An einer Verbindung der Widerstände 131, 132 ist ein erstes Ende einer ersten elektrischen Leitung L1 angeschlossen, die an ihrem anderen Ende an das Busspannung-Haltemodul 15 angeschlossen ist. An einer Verbindung der Widerstände 135, 136 ist eine zweite elektrische Leitung L2 angeschlossen, die an ihrem anderen Ende an das Busspannung-Einstellmodul 16 angeschlossen ist. An einer Verbindung der Widerstände 133, 134 ist eine dritte elektrische Leitung L3 angeschlossen, die an ihrem anderen Ende an das Busspannung-Einstellmodul 16 angeschlossen ist.

Mindestens ein Eingang des Busspannung-Erfassungsmoduls 14 ist an die Anschlüsse für die Bussignale CAN_H, CAN_L auf dem Bus 40 angeschlossen. Ein Ausgang des Busspannung-Erfassungsmoduls 14 ist an einen ersten Eingang des Busspannung-Haltemoduls 15 angeschlossen. Die erste elektrische Leitung L1 ist an ihrem anderen Ende, das nicht an die Verbindung der Widerstände 131, 132 angeschlossen ist, an einen Eingang des Busspannungs-Haltemoduls 15 angeschlossen. Das Busspannung-Erfassungsmoduls 14 hat einen Steuerblock 141, der zum Schalten eines Schalters 142 ausgestaltet ist, und mindestens ein Speicherelement 143. Der Steuerblock 141 ist zum Steuern der Schaltstellung des Schalters 142 ausgestaltet. Der Steuerblock 141 kann auch als Erfassungsmodul-Steuerblock bezeichnet werden. Das Speicherelement 143 ist bei dem Beispiel von Fig. 5 als mindestens ein Kondensator 143 ausgeführt.

Das Speicherelement 143 dient zur Speicherung des derzeitigen Buspotentials. Ist das Speicherelement 143 geladen, steuert der Steuerblock 141 den Schalter 142 an, damit der Schalter 142 geöffnet wird. Somit liegt an dem ersten Eingang des Busspannungs-Haltemoduls 15 konstant das Buspotential an. Als Folge davon verbleibt das Busspannungs-Haltemodul 15 in dem Zustand, der durch die Differenz aus Schwellenspannung U1, die hier 2,1 V ist, und Buspotential auf dem Bus 40 gegeben ist.

Das Busspannungs-Haltemodul 15 ist als Operationsverstärker ausgestaltet.

Der Ausgang des Busspannungs-Haltemoduls 15 ist an einen Eingang des Busspannung-Einstellmoduls 16 angeschlossen. Zudem sind die Leitungen L2, L3 an jeweils einen Eingang des Busspannung-Einstellmoduls 16 angeschlossen.

Das Busspannung-Einstellmodul 16 hat einen Steuerblock 161, der zum Schalten eines Schalters 162 ausgestaltet ist. Der Steuerblock 161 ist zum Steuern der Schaltstellung de s Schalters 162 ausgestaltet. Der Steuerblock 161 kann auch als Einstellmodul-Steuerblock bezeichnet werden. Der Schalter 162 ist bei dem Beispiel von Fig. 5 ein Umschalter.

Ein Ausgang des Busspannung-Einstellmoduls 16, der mit einem Ende des Schalters 162 verbunden ist, ist an einen ersten Eingang des Busspannungs-Treibers 17 angeschlossen. An einen zweiten Eingang des Busspannungs-Treibers 17 ist der Ausgang des Busspannungs-Treibers 17 angeschlossen. Damit ist der Ausgang des Busspannungs-Treibers 17 an den Eingang des Treibers 17 zurückgekoppelt.

Das Busvorspannungsmodul 18 ist zwischen den Busspannungs-Treiber 17 und die Anschlüsse für die Bussignale CAN_H, CAN_L auf dem Bus 40 geschaltet. Somit ist auch das Busvorspannungsmodul 18 an die Anschlüsse für die Bussignale CAN_H, CAN_L elektrisch angeschlossen. Das Busvorspannungsmodul 18 hat einen Steuerblock 181, der zum Steuern der Schaltstellung eines Schalters 182 ausgestaltet ist. Der Steuerblock 181 schaltet den Schalter 182. Der Steuerblock 181 kann auch als Busvorspannungsmodul-Steuerblock bezeichnet werden.

Je nach Steuerung des Steuerblocks 161 schaltet der Schalter 162 entweder die Spannung U2 = 1,9 V von der Leitung L2 oder die Spannung U3 = 2,5 V von der Leitung L3 als Referenz auf den Busspannungs-Treiber 17. Der Busspannungs-Treiber 17 treibt die Busvorspannung für die Signale CAN_L und CAN_H entsprechend über die Anschlüsse für die Busadern 41, 42 auf den Bus 40, wenn der Schalter 182 geschlossen wird.

Für den Betrieb der Teilnehmerstation 10 in dem Bussystem 1 sind die Module 13 bis 18 folgendermaßen ausgestaltet, um ein rezessives Buspotential mit Mischbetrieb einzustellen oder ein rezessives Buspotential ohne Mischbetrieb einzustellen.

Das rezessive Buspotential kann auch als Busvorspannung für den Bus 40 bezeichnet werden. Diese Busvorspannung bildet die Busmittenspannung Vcm, die gleich dem rezessiven Buspotential ist.

Die Teilnehmerstation 10 durchläuft die folgende(n) zeitliche(n) Abfolge(n), um ein rezessives Buspotential mit Mischbetrieb einzustellen.

Nach dem Starten geht die Teilnehmerstation 10 auf eine Spannung U3 = 2,5 V, wenn die Teilnehmerstation 10 noch nicht ausschließen kann, dass es am Bus 40 eine Teilnehmerstation gibt, die eine Spannung von 5V als Busspannungsversorgung verwendet.

Die Teilnehmerstation 10, wie auch die Teilnehmerstation 30, ist ausgestaltet, die Busmittenspannung Vcm = U3 = 2,5 V zu einem vorbestimmten Zeitpunkt "loszulassen" und nur mit dem Erfassungsmodul 14 zu erfassen oder messen, auf welche Spannung sich der Bus 40 einstellt.

Das Loslassen und Erfassen erfolgt für eine vorbestimmte Zeitdauer T_M1 (Fig. 2), insbesondere eine vorbestimmte Anzahl von Bits. Ein solcher vorbestimmter Zeitpunkt t1 ist beispielsweise während der EOF (End of Frame), die 7 rezessive Bits aufweist, wie in Fig. 2 gezeigt und zuvor erwähnt. Insbesondere ist der Zeitpunkt nach einem vorbestimmten Bit der 7 rezessiven Bits.

Somit lassen alle Teilnehmerstationen, die eine Busspannungsversorgung von 3V verwenden, hier also die Teilnehmerstationen 10, 30, für eine vorbestimmte ZeitdauerT_M1 (Fig. 2) die Busmittenspannung Vcm = U3 = 2,5 V los, insbesondere am Ende eines Rahmens 450 in EOF (Fig. 2). Hierfür steuert der Steuerblock 181 den Schalter 182 des Busvorspannungsmodul 18 derart an, dass der Schalter 182 die Verbindung zum Bus 40 für die vorbestimmte Zeitdauer T_M1 (Fig. 2) unterbricht. Die Teilnehmerstation schaltet die Busvorspannung für den Bus 40 ab.

### Erster Fall: Heterogenes Bussystem 1

Gemäß einem ersten Fall, der dem vorliegenden Ausführungsbeispiel entspricht, liegt ein heterogenes Bussystem 1 vor, in dem mindestens eine Teilnehmerstation, beispielsweise die Teilnehmerstation 20, eine Spannungsversorgung 130 von 5 V verwendet und dementsprechend eine Busmittenspannung Vcm = U3 = etwa 2,5 V erwartet und einspeist.

Die Teilnehmerstation 10 weiß jedoch nach ihrem Start noch nicht, ob ein heterogenes Bussystem 1 vorliegt, oder ob ein homogenes Bussystem 1 vorliegt, in dem alle Teilnehmerstationen 10, 20, 30 am Bus 40 dieselbe Busspannungsversorgung wie die Teilnehmerstation 10, insbesondere 3,3 V verwenden, so dass die Busmittenspannung Vcm = U2 = etwa 1,9 V als Busvorspannung auf den Bus 40 eingespeist wird.

### Sendebetrieb der Teilnehmerstation 10

Bei der nächsten Arbitrationsphase 451 auf dem Bus 40 startet die Teilnehmerstation 10 für den rezessiven Zustand 402, der gemäß einem Wert des Sendesignal TxD = H (hoch = high) vorgegeben wird, mit einer Busspannung von 2,5 V. Das heißt, der Steuerblock 161 hat den Schalter 162 in die Verbindung zu der Leitung L3 gestellt. Demzufolge wird die Busmittenspannung Vcm = U3 = etwa 2,5 V als Busvorspannung auf den Bus 40 eingespeist.

Gewinnt die Teilnehmerstation 10 die Arbitration, dann darf die Teilnehmerstation 10 auch in der nachfolgenden Datenphase 452 auf den Bus 40 senden. Hierfür zieht die Teilnehmerstation 10 nach der Arbitrationsphase 451 und vor der Datenphase 452 beim nächsten kommenden rezessiven Zustand 402 den Bus-Pegel für den rezessiven Zustand 402 auf ihre gewünschte Spannung, nämlich U2 = 1,9 V, und sendet. Dabei wird somit die Busmittenspannung Vcm = U2 = etwa 1,9 V eingestellt und wird als Busvorspannung auf den Bus 40 eingespeist.

Nach Abschluss der Datenphase 452 folgt das Ende 459 des Rahmens 450 einschließlich des EOF, wie in Fig. 2 gezeigt. Der Übergang von U3 auf U2 erfolgt dabei "weich". Demzufolge geht die Spannung gleitend in den neuen Wert über, da die inhärente Impedanz des Busses 40 mit den angeschlossenen Teilnehmerstationen 10, 20, 30 und den Leitungen zwischen den Teilnehmerstationen 10, 20, 30 dämpfend auf die Spannungsänderung wirkt.

Die Teilnehmerstation 10, insbesondere ihre Sende-/Empfangseinrichtung 12 und/oder mindestens einer ihrer Steuerblöcke 141, 161, 181, erkennt durch Auswerten des Signals RxD (Fig. 6) sicher das EOF, da für mehr als 5 Bit gilt: RxD = H (hoch = high). EOF ist 7 Bit lang. Hierfür kann die Sende-/Empfangseinrichtung 12 und/oder mindestens einer ihrer Steuerblöcke 141, 161, 181 das Ereignis-Erfassungsmodul 125, insbesondere Zählwerk, zum Auswerten des Empfangssignals RxD haben.

Zu einem gewissen, insbesondere späten, Zeitpunkt, beispielsweise bei Bit 6, im EOF ermittelt die Teilnehmerstation 10, ob auf dem Bus 40 eine Vcm > 1,9 V vorliegt. Konkret liegt die Schwelle bei Vcm = 1,9 V + 10%.

Verwendet beispielsweise die Teilnehmerstation 20, eine Busspannungsversorgung von 5V und speist dementsprechend eine Busmittenspannung Vcm = U3 = 2,5V ein, ergibt sich bei der Messung des Erfassungsmoduls 14, dass das Speicherelement 142 auf eine Spannung von beispielsweise 2,5 V aufgeladen wurde. Demzufolge liegt dann an dem ersten Eingang des Busspannungs-Haltemoduls 15 die Busmittenspannung Vcm = U3 = 2,5 V an.

Folglich wertet die Teilnehmerstation 10 aus, dass es 5V-Teilnehmerstationen am Bus 40 gibt. Somit steuert der Steuerblock 161 den Schalter 162 an, dass das Potential U3 = 2,5 V der Leitung L3 an den Eingang des Moduls 17 geschaltet wird. Demzufolge kann über den Schalter 182 die Busmittenspannung Vcm = U3 = etwa 2,5 V als Busvorspannung auf den Bus 40 eingespeist werden.

Die Einstellung auf die Busvorspannung an dem Bus 40 bzw. das Potential U3 = 2,5 V kann insbesondere während Bit 7 oder eines der folgenden 4 rezessiven Bits erfolgen.

### Teilnehmerstation 10 sendet nicht, Empfangsbetrieb

Wenn die Teilnehmerstation 10 nicht sendet, verliert die Teilnehmerstation 10 entweder die Arbitration oder hat keine Daten bzw. Nachricht 45 zu senden. Somit empfängt die Teilnehmerstation 10 nur die Signale CAN_H, CAN_L von Bus 40 und erzeugt daraus das RxD-Signal.

Die Teilnehmerstation 10, insbesondere ihre Sende-/Empfangseinrichtung 12 und/oder mindestens einer ihrer Steuerblöcke 141, 161, 181, erkennt durch Auswerten des Signals RxD sicher das EOF, da für mehr als 5Bit gilt RxD = H (hoch = high). EOF ist 7Bit lang. Hierfür kann die Sende-/Empfangseinrichtung 12 und/oder mindestens einer ihrer Steuerblöcke 141, 161, 181 das Ereignis-Erfassungsmodul 125, insbesondere Zählwerk, zum Auswerten des Empfangssignals RxD haben.

Zu einem vorbestimmten, insbesondere späten, Zeitpunkt, beispielsweise bei Bit 6, im EOF ermittelt die Teilnehmerstation 10, ob auf dem Bus 40 eine Vcm > 1,9 V vorliegt. Konkret liegt die Schwelle bei Vcm = 1,9 V + 10%.

Verwendet beispielsweise die Teilnehmerstation 20, eine Busspannungsversorgung von 5 V und speist dementsprechend eine Busmittenspannung Vcm = U3 = 2,5 V ein, ergibt sich bei der Messung des Erfassungsmoduls 14, dass das Speicherelement 142 auf eine Spannung von beispielsweise 2,5 V aufgeladen wurde. Demzufolge liegt dann an dem ersten Eingang des Busspannungs-Haltemoduls 15 die Busmittenspannung Vcm = U3 = 2,5 V an.

Somit wertet die Teilnehmerstation 10 aus, dass es 5V-Teilnehmerstationen am Bus 40 gibt. Als Folge davon steuert der Steuerblock 161 den Schalter 162 an, dass das Potential U3 = 2,5V der Leitung L3 an den Eingang des Moduls 17 geschaltet wird. Die Einstellung auf das Potential U3 = 2,5 V kann insbesondere während Bit 7 des EOF (Fig. 1) oder eines der folgenden 4 rezessiven Bits erfolgen. Damit wird für den rezessiven Zustand 402, der gemäß einem Wert des Sendesignal TxD = H (hoch = high) vorgegeben wird, eine Busspannung von 2,5 V vorgegeben. Das heißt, der Steuerblock 161 hat den Schalter 162 in die Verbindung zu der Leitung L3 gestellt.

### Zweiter Fall: Homogenes Bussystem 1

Gemäß einem zweiten Fall liegt ein homogenes Bussystem 1 vor, in dem alle Teilnehmerstationen, also auch die Teilnehmerstation 20, eine Busspannungsversorgung 130 von 3,3 V verwenden.

Die Teilnehmerstation 10 weiß jedoch nach ihrem Start noch nicht, ob ein heterogenes Bussystem 1 vorliegt, oder ob ein homogenes Bussystem 1 vorliegt, in dem alle Teilnehmerstationen am Bus 40 dieselbe Busspannungsversorgung wie die Teilnehmerstation 10, insbesondere 3,3 V, verwenden, so dass eine Busmittenspannung Vcm = U2 = etwa 1,9V auf den Bus 40 eingespeist wird.

Eine der Teilnehmerstationen 10, 20, 30 sendet einen Rahmen 450 auf dem Bus 40. Bei der nächsten Arbitrationsphase 451 auf dem Bus 40 starten die sendenden Teilnehmerstationen 10, 20, 30 für den rezessiven Zustand 402, der gemäß einem Wert des Sendesignal TxD = H (hoch = high) vorgegeben wird, mit einer Busspannung von 2,5 V. Das heißt, der Steuerblock 161 hat den Schalter 162 in die Verbindung zu der Leitung L3 gestellt. Die Teilnehmerstation(en), die keine Daten senden wollen, erwartet/n, dass auch eine der anderen Teilnehmerstationen eine Busspannungsversorgung von 5 V verwendet.

Im nächsten Schritt geht jede der Teilnehmerstationen 10, 20, 30 nach einem der zuvor beschriebenen Abläufe für Sendebetrieb oder Empfangsbetrieb vor, um festzustellen, ob eine der anderen Teilnehmerstationen eine Busspannungsversorgung von 5 V verwendet.

In einem homogenen Bussystem 1 ergibt die Erfassung mit der Busspannungs-Erfassungseinrichtung 14, dass keine der anderen Teilnehmerstationen eine Busspannungsversorgung von 5 V verwendet.

Daher stellen die Teilnehmerstationen 10, 20, 30 des Bussystems 1 dauerhaft den Schalter 162 derart, dass das Potential der Leitung L2 auf den Eingang des Moduls 17 geschaltet ist. "Dauerhaft" bedeutet, dass nach der beschriebenen Einstellung des Moduls 16 keine Erfassungen mit dem Erfassungsmodul 14 durchgeführt werden. Alternativ kann "dauerhaft" jedoch bedeuten, dass nach der beschriebenen Einstellung des Moduls 16 von Zeit zu Zeit, insbesondere jeden N-ten Rahmen 450, eine Messung mit dem Modul 14 durchgeführt wird. N ist eine natürliche Zahl größer 1. Die Zeitabstände zwischen den Messungen müssen nicht gleich sein.

Somit ist die Teilnehmerstation 10 ausgestaltet, eine Erfassung oder Messung während mindestens eines rezessiven Busstands vorzunehmen, um zu ermitteln, ob auf dem Bus 40 eine Busmittenspannung Vcm > 1,9 V vorliegt. Konkret liegt die Schwelle bei 1,9 V + 10%.

Optional könnte mindestens eine der Teilnehmerstationen 10, 30 zusätzlich während der Arbitrationsphase 451 an mindestens einem Dominant-Pegel 402 des Siegers der Arbitration erkennen, ob der Sieger der Arbitration eine Busspannungsversorgung von 5V oder 3V verwendet. Somit würden die Teilnehmerstationen 10, 30 zusätzlich in der Arbitrationsphase 451 mit dem Erfassungsmodul 14 ab einem Zeitpunkt t2 (Fig. 2) für eine Zeitdauer T_M2 (Fig. 2) eine Erfassung durchführen, um zu ermitteln, ob auf dem Bus 40 eine Busmittenspannung Vcm > 1,9 V vorliegt. Konkret liegt die Schwelle bei 1,9V+ 10%. Die Zeitdauern T_M1, T_M2 können gleich oder unterschiedlich sein.

Optional könnte mindestens eine der Teilnehmerstationen 10, 30 zusätzlich während der SIC-Phase, die gleich der Arbitrationsphase 451 ist, eine Erfassung mit dem Erfassungsmodul 14 durchführen. Dazu wird der Wert von Vcm_sic ermittelt innerhalb der Zeitdauer t_sic <= 355ns (Fig. 9). Die Zeitdauer t_sic entspricht der Mindestzeit, in welcher der Zustand 403 (sic) aktiv ist, beginnend ab Übergang vom Zustand 401 (dom) zu dem Zustand 402 (rec) am Ende der Arbitration. Die Zeitdauer T_M1 kann sich von der Zeit von t_sic unterscheiden.

Die vorgenannten Verfahren sind auch anwendbar, wenn mindestens eine der Teilnehmerstationen 10, 30 als CAN-XL-Knoten fungiert, also eine CAN-XL-Nachricht 45 sendet.

Gemäß den zuvor beschriebenen Ausgestaltungen ist die beschriebene Sende-/Empfangseinrichtung 12 der Teilnehmerstation 10 ausgestaltet, kontrolliert niederohmiger zu werden als die anderen Sende-/Empfangseinrichtungen 20, 30 am Bus 40. Das "Niederohmiger werden" erfolgt innerhalb der Zeit, die sich die Teilnehmerstation 10, 30 oder die Teilnehmerstation 20 nach CAN-Spezifikation Zeit lassen darf, bevor sie nach der Arbitrationsphase 451 das Senden beginnen muss. Sobald das "Niederohmiger werden" erfolgt ist, kann die Teilnehmerstation 10, insbesondere ihre Sende-/Empfangseinrichtung 12, innerhalb der Grenzen der EMV-Spezifikation ihre Nachricht 45 oder 47 senden. Im Anschluss an den Sendevorgang muss die Teilnehmerstationen 10 genauso hochohmig werden, wie die anderen Teilnehmerstationen 20, 30 am Bus 40, womit sich die Busspannung dann wieder irgendwo in der Mitte einstellt. Für diesen Vorgang hat die Teilnehmerstation 10 erneut ein wenig Zeit, die in der CAN-Spezifikation festgelegt ist.

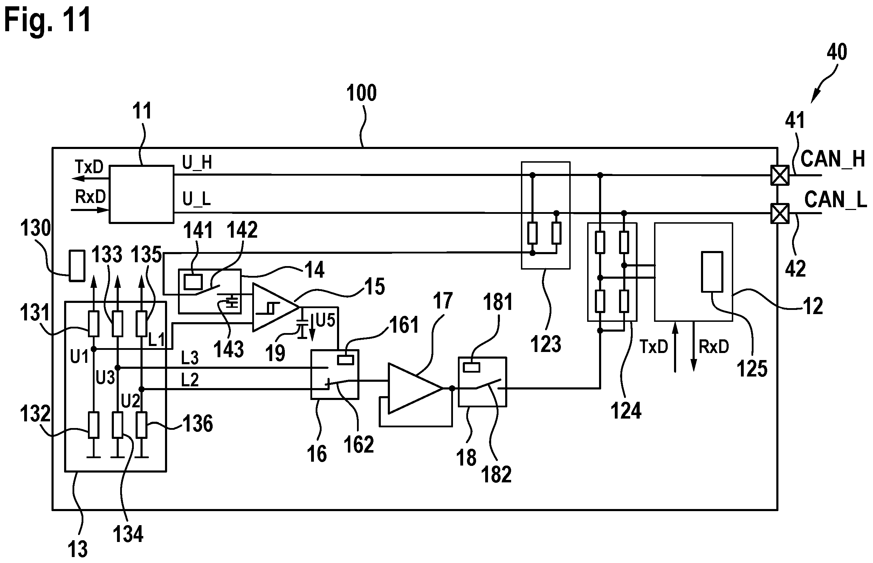

Fig. 11 zeigt eine Teilnehmerstation 100 gemäß einem zweiten Ausführungsbeispiel.

Die Teilnehmerstation 100 ist in weiten Teilen auf dieselbe Weise ausgeführt wie die Teilnehmerstation 10 des vorangehenden Ausführungsbeispiels. Daher sind nachfolgend nur die Unterschiede zu der Teilnehmerstation 10 des vorangehenden Ausführungsbeispiels beschrieben.

Im Unterschied zu der Teilnehmerstation 10 des vorangehenden Ausführungsbeispiels hat die Teilnehmerstation 100 von Fig. 11 mindestens ein Speicherelement 19. Das Speicherelement 19 ist bei dem Beispiel von Fig. 11 als mindestens ein Kondensator ausgeführt. Das Speicherelement 19 dient zur Speicherung der Spannung U5 am Ausgang des Haltemoduls 15. Die Spannung U5 entspricht dem von dem Haltemodul 15 ausgegebenen Buspotential des Busses 40.

Dadurch kann noch besser sichergestellt werden, dass an dem entsprechenden Eingang des Moduls 16 das Buspotential anliegt, was von dem Modul 14 erfasst wurde.

Dadurch wird die Funktion von zumindest dem Modul 15 und damit das Ergebnis des Moduls 16 im Vergleich zu der Teilnehmerstation 10 des vorangehenden Ausführungsbeispiels weiter verbessert. Dadurch ist auch die Funktion der Teilnehmerstation 100 im Vergleich zu der Teilnehmerstation 10 des vorangehenden Ausführungsbeispiels weiter verbessert.

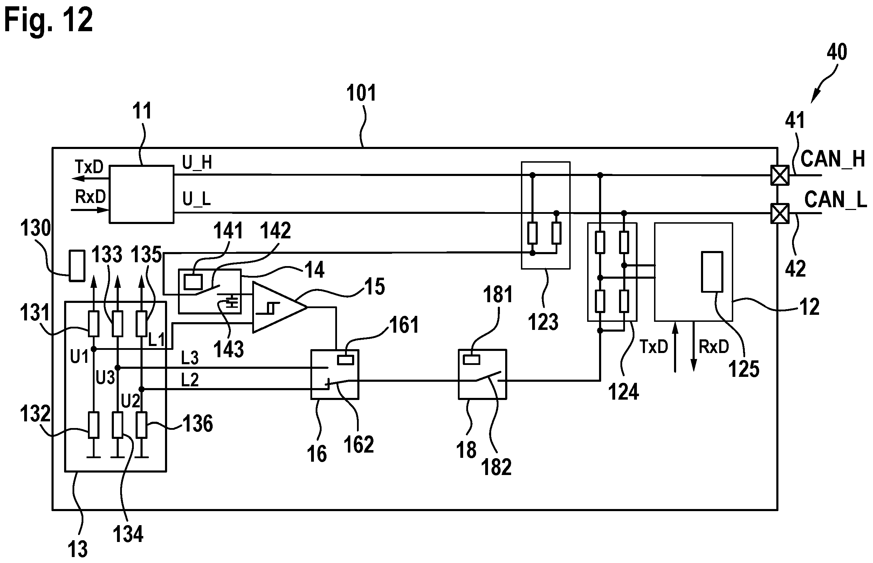

Fig. 12 zeigt eine Teilnehmerstation 101 gemäß einem dritten Ausführungsbeispiel.

Die Teilnehmerstation 101 ist in weiten Teilen auf dieselbe Weise ausgeführt wie die Teilnehmerstation 10 des vorangehenden Ausführungsbeispiels. Daher sind nachfolgend nur die Unterschiede zu der Teilnehmerstation 10 des vorangehenden Ausführungsbeispiels beschrieben.

Im Unterschied zu der Teilnehmerstation 10 des vorangehenden Ausführungsbeispiels hat die Teilnehmerstation 101 von Fig. 12 kein Modul 17. Daher werden die Referenzspannungsquellen des Moduls 13 direkt zum Treiben der Busadern 41, 42 verwendet.

Dadurch wird die Schaltung der Teilnehmerstation 10 weiter vereinfacht.

Gemäß einem vierten Ausführungsbeispiel ist das Modul 13 als Halbleiter ausgestaltet, der drei Bandlückenableitungen (Bandgap-Ableitungen) aufweist.

Das heißt, wie in Fig. 10 bis Fig. 12 gezeigt, hat das Modul 13 hat eine erste Bandlückenableitung 131, 132, welche die Spannung U1 für die Leitung L1 der Teilnehmerstationen 10, 100, 101 bereitstellt. Zudem hat das Modul 13 hat eine zweite Bandlückenableitung 133, 134, welche die Spannung U3 für die Leitung L3 der Teilnehmerstationen 10, 100, 101 bereitstellt. Zudem hat das Modul 13 eine dritte Bandlückenableitung 135, 136, welche die Spannung U2 für die Leitung L2 der Teilnehmerstationen 10, 100, 101 bereitstellt. Dadurch stellen, anstelle der Widerstände 131 bis 136 in Fig. 10 bis Fig. 12, die Bandlückenableitungen (Bandgap-Ableitungen) des Halbleiters die zuvor beschriebenen Referenzspannungen U1, U2, U3 bereit.

Im Übrigen ist die Funktion dieselbe, wie bei den vorangehenden Ausführungsbeispielen beschrieben

Alle zuvor beschriebenen Ausgestaltungen der Sende-/Empfangseinrichtungen 12, 22, der Teilnehmerstationen 10, 20, 30, des Bussystems 1 und des darin ausgeführten Verfahrens gemäß dem Ausführungsbeispiel und dessen Modifikationen können einzeln oder in allen möglichen Kombinationen Verwendung finden. Zusätzlich sind insbesondere folgende Modifikationen denkbar.

Das zuvor beschriebene Bussystem 1 ist anhand eines auf dem CAN-Protokoll basierenden Bussystems beschrieben. Das Bussystem 1 gemäß dem Ausführungsbeispiel kann jedoch alternativ eine andere Art von Kommunikationsnetz sein, bei dem die Signale als differentielle Signale übertragen werden.

Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf den Bus 40 gewährleistet ist.

Das Bussystem 1 gemäß dem Ausführungsbeispiel und dessen Modifikationen ist insbesondere ein Bussystem, bei dem zwischen mindestens zwei der Teilnehmerstationen 10, 20, 30 gemäß zwei verschiedenen CAN-Standards kommuniziert werden kann, wie beispielsweise CAN-HS oder CAN FD oder CAN SIC oder CAN XL. Somit ist die Funktionalität des zuvor beschriebenen Ausführungsbeispiels beispielsweise bei Sende-/Empfangseinrichtungen 12, 22 einsetzbar, die in einem derartigen Bussystem zu betreiben sind.

Die Anzahl und Anordnung der Teilnehmerstationen 10, 20, 30 in dem Bussystem 1 gemäß dem Ausführungsbeispiel und dessen Modifikationen ist beliebig wählbar.

Möglich ist insbesondere, dass die Teilnehmerstation 10 eine Busspannungsversorgung von 5 V hat und die Teilnehmerstation eine Busspannungsversorgung von 3,3 V hat.

Zudem ist die Busspannungsversorgung einer der Teilnehmerstationen 10, 20, 30 nicht auf 3,3 V beschränkt. Die Busspannungsversorgung kann einen anderen Wert als 3,3 V haben. Auch hierfür ist das zuvor beschriebene Prinzip des Bussystems 1 mit Teilnehmerstationen 10, 20, 30 im Mischbetrieb anwendbar. Gegebenenfalls sind hierfür die genannten Spannungen des Moduls 13 entsprechend anzupassen.

## Patentansprüche

1. Teilnehmerstation (10; 30) eines seriellen Bussystems (1), mit
einer Sende-/Empfangseinrichtung (12) zum Senden eines digitalen Sendesignals (TxD) als analoges differentielles Signal (CAN_H, CAN_L) auf einen Bus (40) des Bussystems (1), um an mindestens eine andere Teilnehmerstation (10; 20; 30) des Bussystems (1) eine Nachricht (45; 46; 47) zu senden, und/oder zum Empfangen eines analogen Signals (CAN_H, CAN_L; VDIFF)von dem Bus (40),
einem Schaltmodul (18) zum Abschalten einer Busvorspannung (U2; U3) für den Bus (40) während einer vorbestimmten Erfassungszeitdauer (T_M1; T_M1, T_M2; T_M3),
einem Busspannung-Erfassungsmodul (14) zur Erfassung der von der Sende-/Empfangseinrichtung (12) von dem Bus (40) empfangenen Busspannung (Vcm) während der vorbestimmten Erfassungszeitdauer (T_M1; T_M1, T_M2; T_M3), und
einem Busspannung-Einstellmodul (16) zum Einstellen der Busvorspannung (U2; U3) auf einen Spannungswert, der sich aus einer von dem Busspannung-Erfassungsmodul (14) während der vorbestimmten Erfassungszeitdauer (T_M1; T_M1, T_M2; T_M3) durchgeführten Erfassung ergibt.

2. Teilnehmerstation (10; 30) nach Anspruch 1, zudem mit einem Erfassungsmodul-Steuerblock (141) zum Steuern des Busspannung-Erfassungsmoduls (14) derart, dass während der vorbestimmten Erfassungszeitdauer (T_M1; T_M1, T_M2) auf dem Bus (40) ein rezessiver Zustand (402) herrscht, der von einem dominanten Zustand (401) auf dem Bus (40) überschreibbar ist.

3. Teilnehmerstation (10; 30) nach Anspruch 1 oder 2,
zudem mit einem Erfassungsmodul-Steuerblock (141) zum Steuern des Busspannung-Erfassungsmoduls (14) derart, dass während der vorbestimmten Erfassungszeitdauer (T_M1; T_M1, T_M2) auf dem Bus (40) ein Übergang von einem dominanten Zustand (401) in einen rezessiven Zustand stattfindet, der von einem dominanten Zustand (401) auf dem Bus (40) überschreibbar ist,
wobei der Übergang von dem dominanten Zustand (401) in einen rezessiven Zustand insbesondere ein SIC-Zustand (403) ist.

4. Teilnehmerstation (10; 30) nach einem der vorangehenden Ansprüche,
zudem mit einem Erfassungsmodul-Steuerblock (141) zum Steuern des Busspannung-Erfassungsmoduls (14) derart, dass während der vorbestimmten Erfassungszeitdauer (T_M1; T_M1, T_M2) das Ende der Arbitrationsphase (451) stattfindet und ein dominanter Zustand auf dem Bus (40) herrscht.

5. Teilnehmerstation (10; 30) nach einem der vorangehenden Ansprüche,
wobei das Busspannung-Erfassungsmodul (14) zudem einen Schalter (142) und ein Speicherelement (143) aufweist, und
wobei der Erfassungsmodul-Steuerblock (141) ausgestaltet ist, den Schalter (142) zum Verbinden des Speicherelements (143) mit dem Bus (40) zu steuern, um die von der Sende-/Empfangseinrichtung (12) von dem Bus (40) empfangene Busspannung (Vcm) zu erfassen.

6. Teilnehmerstation (10; 30) nach einem der vorangehenden Ansprüche,
zudem mit einem Busspannung-Bereitstellmodul (13) zum Bereitstellen von zwei unterschiedlichen Busvorspannungen (U2; U3),
wobei das Busspannung-Einstellmodul (16) ausgestaltet ist, auf der Grundlage der von dem Busspannung-Erfassungsmodul (14) während der vorbestimmten Erfassungszeitdauer (T_M1; T_M1, T_M2) erfassten Busspannung (Vcm), eine der zwei unterschiedlichen Busvorspannungen (U2; U3) für die Sende-/Empfangseinrichtung (12) einzustellen.

7. Teilnehmerstation (10; 30) nach Anspruch 6, wobei das Busspannung-Bereitstellmodul (13) einen Spannungsteiler mit sechs Widerständen (131...136) zum Bereitstellen der zwei unterschiedlichen Busvorspannungen (U2; U3) aufweist.

8. Teilnehmerstation (10; 30) nach Anspruch 6, wobei das Busspannung-Bereitstellmodul (13) einen Halbleiter mit drei Bandlückenableitungen (131,132; 133, 134; 135, 136) zum Bereitstellen der zwei unterschiedlichen Busvorspannungen (U2; U3) aufweist.

9. Teilnehmerstation (10; 30) nach einem der vorangehenden Ansprüche, wobei das Busspannung-Einstellmodul (16) einen Umschalter (162) und einen Einstellmodul-Steuerblock (161) aufweist zum Steuern der Stellung des Umschalters (162) auf der Grundlage der von dem Busspannung-Erfassungsmodul (14) während der vorbestimmten Erfassungszeitdauer (T_M1; T_M1, T_M2) erfassten Busspannung (Vcm).

10. Teilnehmerstation (10; 30) nach einem der vorangehenden Ansprüche, wobei die Teilnehmerstation (10; 30) ausgestaltet ist, während einer ersten Kommunikationsphase (451) mit den anderen Teilnehmerstationen (10; 20; 30) des Bussystems (1) auszuhandeln, welche der Teilnehmerstationen (10; 20; 30) in der folgenden zweiten Kommunikationsphase (452) einen exklusiven Zugriff auf den Bus (40) hat und somit Ihre Nachricht (45; 46; 47) senden darf.

11. Teilnehmerstation (10; 30) nach einem der vorangehenden Ansprüche, wobei die Sende-/Empfangseinrichtung (12) ausgestaltet ist, das analoge differentielle Signal (CAN_H, CAN_L) in einer ersten Kommunikationsphase (451) der Nachricht (45) mit einem anderen Physical Layer (451_P) zu erzeugen als in einer zweiten Kommunikationsphase (452).

12. Teilnehmerstation (10; 30) nach einem der vorangehenden Ansprüche,
zudem mit einem Ereignis-Erfassungsmodul (125) zur Erfassung eines Ereignisses (E1; E2; E3), nach welchem das Busspannung-Erfassungsmodul (14) eine Erfassung der auf dem Bus (40) vorliegenden Busspannung (Vcm) vorzunehmen hat,
wobei der Erfassungsmodul-Steuerblock (141) ausgestaltet ist, das Busspannung-Erfassungsmodul (14) zum Erfassen der auf dem Bus (40) vorliegenden Busspannung (Vcm) während der vorbestimmten Erfassungszeitdauer (T_M1; T_M1, T_M2; T_M3) anzusteuern, nachdem das Ereignis-Erfassungsmodul (125) das Ereignis (E1; E2; E3) erfasst hat.

13. Teilnehmerstation (10; 30) nach Anspruch 12, wobei das Ereignis (E1) eine vorbestimmte Anzahl von direkt aufeinanderfolgenden rezessiven Bits am Ende (EOF) eines für die Nachricht (45; 46; 47) über den Bus (40) gesendeten Rahmens (450) ist.

14. Teilnehmerstation (10; 30) nach Anspruch 12 oder 13 und bei Abhängigkeit von Anspruch 10,
wobei das Ereignis (E2) ist, dass am Ende der ersten Kommunikationsphase (451) die Teilnehmerstation (10; 20; 30) ermittelt ist, die in der folgenden zweiten Kommunikationsphase (452) den exklusiven Zugriff auf den Bus (40) hat und somit ihre Nachricht (45; 46; 47) senden darf.

15. Teilnehmerstation (10; 30) nach einem der vorangehenden Ansprüche,
zudem mit einem Busspannung-Haltemodul (15) zum Halten der von dem Busspannung-Erfassungsmodul (14) auf dem Bus (40) erfassten Busspannung (Vcm), und
optional zudem mit einem Speicherelement (19), das zwischen dem Busspannung-Haltemodul (15) und dem Busspannung-Einstellmodul (16) zum Speichern einer Spannung (U5) am Ausgang des Busspannung-Erfassungsmoduls (14) angeordnet ist.

16. Teilnehmerstation (10; 30) nach einem der vorangehenden Ansprüche, zudem mit einem Busspannungs-Treiber (17) zum Treiben der von dem Busspannung-Einstellmodul (16) eingestellten Busvorspannung (U2; U3) für die Sende-/Empfangseinrichtung (12) auf den Bus (40).

17. Teilnehmerstation (20) für ein serielles Bussystem (1), zudem mit
einer Kommunikationssteuereinrichtung (11) zum Steuern der Kommunikation in dem Bussystem (1) und zur Erzeugung des Sendesignals (TXD),
wobei die Teilnehmerstation (20) für die Kommunikation in einem Bussystem (1) ausgestaltet ist, in dem zumindest zeitweise ein exklusiver, kollisionsfreier Zugriff einer Teilnehmerstation (10, 20, 30) auf den Bus (40) des Bussystems (1) gewährleistet ist.

18. Bussystem (1), mit
einem Bus (40), und
mindestens zwei Teilnehmerstationen (10, 20; 10, 30; 20, 30), welche über den Bus (40) derart miteinander verbunden sind, dass sie seriell miteinander kommunizieren können und von denen mindestens eine Teilnehmerstation (10, 20; 10, 30; 20, 30) eine Teilnehmerstation (10; 30) nach einem der vorangehenden Ansprüche ist.

19. Verfahren zur Kommunikation mit differentiellen Signalen (CAN_H, CAN_L) in einem seriellen Bussystem (1), bei dem eine Teilnehmerstation (10: 30) des Bussystems (1) eine Sende-/Empfangseinrichtung (12) zum Senden eines digitalen Sendesignals (TxD) als analoges differentielles Signal (CAN_H, CAN_L) auf einen Bus (40) des Bussystems (1) hat, um an mindestens eine andere Teilnehmerstation (10; 20; 30) des Bussystems (1) eine Nachricht (45; 46; 47) zu senden, und/oder zum Empfangen eines analogen Signals (CAN_H, CAN_L; VDIFF)von dem Bus (40), wobei das Verfahren die Schritte aufweist
Abschalten, mit einem Schaltmodul (18), einer Busvorspannung (U2; U3) für den Bus (40) während einer vorbestimmten Erfassungszeitdauer (T_M1; T_M1, T_M2; T_M3),
Erfassen, mit einem Busspannung-Erfassungsmodul (14), der von der Sende-/Empfangseinrichtung (12) von dem Bus (40) empfangenen Busspannung (Vcm) während der vorbestimmten Erfassungszeitdauer (T_M1; T_M1, T_M2; T_M3), und
Einstellen, mit einem Busspannung-Einstellmodul (16), der Busvorspannung (U2; U3) auf einen Spannungswert, der sich aus einer von dem Busspannung-Erfassungsmodul (14) während der vorbestimmten Erfassungszeitdauer (T_M1; T_M1, T_M2; T_M3) durchgeführten Erfassung ergibt.

## Claims

1. Subscriber station (10; 30) in a serial bus system (1), having
a transmitting/receiving device (12) for transmitting a digital transmission signal (TxD) as an analogue differential signal (CAN_H, CAN_L) to a bus (40) of the bus system (1) in order to transmit a message (45; 46; 47) to at least one other subscriber station (10; 20; 30) in the bus system (1), and/or for receiving an analogue signal (CAN_H, CAN_L; VDIFF) from the bus (40),
a switching module (18) for switching off a bus bias voltage (U2; U3) for the bus (40) during a predetermined detection period (T_M1; T_M1, T_M2; T_M3),
a bus voltage detection module (14) for detecting the bus voltage (Vcm) received from the bus (40) by the transmitting/receiving device (12) during the predetermined detection period (T_M1; T_M1, T_M2; T_M3), and
a bus voltage adjustment module (16) for setting the bus bias voltage (U2; U3) to a voltage value that results from a detection performed by the bus voltage detection module (14) during the predetermined detection period (T_M1; T_M1, T_M2; T_M3).

2. Subscriber station (10; 30) according to Claim 1, also having a detection module control block (141) for controlling the bus voltage detection module (14) in such a way that during the predetermined detection period (T_M1; T_M1, T_M2) there is a recessive state (402) on the bus (40), which can be overwritten on the bus (40) by a dominant state (401).

3. Subscriber station (10; 30) according to Claim 1 or 2,
also having a detection module control block (141) for controlling the bus voltage detection module (14) in such a way that during the predetermined detection period (T_M1; T_M1, T_M2) a transition occurs on the bus (40) from a dominant state (401) to a recessive state, which can be overwritten on the bus (40) by a dominant state (401),
the transition from the dominant state (401) to a recessive state being in particular an SIC state (403).

4. Subscriber station (10; 30) according to one of the preceding claims,
also having a detection module control block (141) for controlling the bus voltage detection module (14) in such a way that during the predetermined detection period (T_M1; T_M1, T_M2) the end of the arbitration phase (451) occurs and there is a dominant state on the bus (40).

5. Subscriber station (10; 30) according to one of the preceding claims,
the bus voltage detection module (14) also comprising a switch (142) and a memory element (143), and
the detection module control block (141) being configured to control the switch (142) to connect the memory element (143) to the bus (40) in order to detect the bus voltage (Vcm) received from the bus (40) by the transmitting/receiving device (12).

6. Subscriber station (10; 30) according to one of the preceding claims,
also having a bus voltage provisioning module (13) for providing two different bus bias voltages (U2; U3),
the bus voltage adjustment module (16) being configured to set one of the two different bus bias voltages (U2; U3) for the transmitting/receiving device (12) on the basis of the bus voltage (Vcm) detected by the bus voltage detection module (14) during the predetermined detection period (T_M1; T_M1, T_M2).

7. Subscriber station (10; 30) according to Claim 6, the bus voltage provisioning module (13) comprising a voltage divider having six resistors (131 ...136) for providing the two different bus bias voltages (U2; U3).

8. Subscriber station (10; 30) according to Claim 6, the bus voltage provisioning module (13) comprising a semiconductor having three bandgap derivatives (131,132; 133, 134; 135, 136) for providing the two different bus bias voltages (U2; U3).

9. Subscriber station (10; 30) according to one of the preceding claims, the bus voltage adjustment module (16) comprising a changeover switch (162) and an adjustment module control block (161) for controlling the position of the changeover switch (162) on the basis of the bus voltage (Vcm) detected by the bus voltage detection module (14) during the predetermined detection period (T_M1; T_M1, T_M2).

10. Subscriber station (10; 30) according to one of the preceding claims, the subscriber station (10; 30) being configured to use a first communication phase (451) to negotiate with the other subscriber stations (10; 20; 30) in the bus system (1) which of the subscriber stations (10; 20; 30) has exclusive access to the bus (40), and may therefore send its message (45; 46; 47), in the subsequent second communication phase (452).

11. Subscriber station (10; 30) according to one of the preceding claims, the transmitting/receiving device (12) being configured to generate the analogue differential signal (CAN_H, CAN_L) using a different physical layer (451_P) in a first communication phase (451) of the message (45) than in a second communication phase (452).

12. Subscriber station (10; 30) according to one of the preceding claims,
also having an event detection module (125) for detecting an event (E1; E2; E3) after which the bus voltage detection module (14) needs to detect the bus voltage (Vcm) present on the bus (40),
the detection module control block (141) being configured to actuate the bus voltage detection module (14) to detect the bus voltage (Vcm) present on the bus (40) during the predetermined detection period (T_M1; T_M1, T_M2; T_M3) after the event detection module (125) has detected the event (E1; E2; E3).

13. Subscriber station (10; 30) according to Claim 12, the event (E1) being a predetermined number of directly consecutive recessive bits at the end (EOF) of a frame (450) transmitted via the bus (40) for the message (45; 46; 47).

14. Subscriber station (10; 30) according to Claim 12 or 13 when dependent on Claim 10,
the event (E2) being that at the end of the first communication phase (451) the subscriber station (10; 20; 30) that has exclusive access to the bus (40), and may thus send its message (45; 46; 47), in the subsequent second communication phase (452) has been determined.

15. Subscriber station (10; 30) according to one of the preceding claims,
also having a bus voltage retention module (15) for retaining the bus voltage (Vcm) detected on the bus (40) by the bus voltage detection module (14), and optionally also having a memory element (19), arranged between the bus voltage retention module (15) and the bus voltage adjustment module (16), for storing a voltage (U5) at the output of the bus voltage detection module (14).

16. Subscriber station (10; 30) according to one of the preceding claims, also having a bus voltage driver (17) for driving the bus bias voltage (U2; U3) for the transmitting/receiving device (12) that is set by the bus voltage adjustment module (16) onto the bus (40).

17. Subscriber station (20) for a serial bus system (1), also having
a communication control device (11) for controlling the communication in the bus system (1) and for generating the transmission signal (TXD),
the subscriber station (20) being configured for communication in a bus system (1) in which exclusive, collision-free access by a subscriber station (10, 20, 30) to the bus (40) of the bus system (1) is at least temporarily guaranteed.

18. Bus system (1) having
a bus (40), and
at least two subscriber stations (10, 20; 10, 30; 20, 30) that are connected to one another via the bus (40) in such a way that they can communicate with one another serially, and at least one subscriber station (10, 20; 10, 30; 20, 30) of which is a subscriber station (10; 30) according to one of the preceding claims.

19. Method for communicating using differential signals (CAN_H, CAN_L) in a serial bus system (1) in which a subscriber station (10; 30) in the bus system (1) has a transmitting/receiving device (12) for transmitting a digital transmission signal (TxD) as an analogue differential signal (CAN_H, CAN_L) to a bus (40) of the bus system (1) in order to transmit a message (45; 46; 47) to at least one other subscriber station (10; 20; 30) in the bus system (1), and/or for receiving an analogue signal (CAN_H, CAN_L; VDIFF) from the bus (40), the method comprising the steps of
switching off, using a switching module (18), a bus bias voltage (U2; U3) for the bus (40) during a predetermined detection period (T_M1; T_M1, T_M2; T_M3),
detecting, using a bus voltage detection module (14), the bus voltage (Vcm) received from the bus (40) by the transmitting/receiving device (12) during the predetermined detection period (T_M1; T_M1, T_M2; T_M3), and
setting, using a bus voltage adjustment module (16), the bus bias voltage (U2; U3) to a voltage value that results from a detection performed by the bus voltage detection module (14) during the predetermined detection period (T_M1; T_M1, T_M2; T_M3).

## Revendications

1. Station d'abonné (10 ; 30) pour un système de bus (1) série, avec un dispositif d'envoi/de réception (12) destiné à envoyer un signal d'envoi numérique (TxD) sous forme de signal différentiel analogique (CAN_H, CAN_L) à un bus (40) du système de bus (1) pour envoyer un message (45 ; 46 ; 47) à au moins une autre station d'abonné (10 ; 20 ; 30) du système de bus (1) et/ou pour recevoir un signal analogique (CAN_H, CAN_L ; VDIFF) du bus (40),
un module de commutation (18) pour couper une tension de polarisation de bus (U2 ; U3) pour le bus (40) pendant une durée de détection prédéfinie (T_M1 ; T_M1, T_M2 ; T_M3),
un module de détection de tension de bus (14) destiné à détecter la tension de bus (Vcm) reçue du bus (40) par le dispositif d'envoi/de réception (12) pendant la durée de détection prédéfinie (T_M1 ; T_M1, T_M2 ; T_M3), et un module de réglage de tension de bus (16) destiné à régler la tension de polarisation de bus (U2 ; U3) sur une valeur de tension, qui résulte d'une détection effectuée par le module de détection de tension de bus (14) pendant la durée de détection prédéfinie (T_M1 ; T_M1, T_M2 ; T_M3).

2. Station d'abonné (10 ; 30) selon la revendication 1, avec en outre un bloc de commande de module de détection (141) destiné à commander le module de détection de tension de bus (14) de telle manière que, pendant la durée de détection prédéfinie (T_M1 ; T_M1, T_M2), un état récessif (402) prévaut sur le bus (40), lequel peut être écrasé par un état dominant (401) sur le bus (40).

3. Station d'abonné (10 ; 30) selon la revendication 1 ou la revendication 2, avec en outre un bloc de commande de module de détection (141) destiné à commander le module de détection de tension de bus (14) de telle manière que se produit sur le bus (40), pendant la durée de détection prédéfinie (T_M1 ; T_M1, T_M2), une transition d'un état dominant (401) à un état récessif, qui peut être écrasé par un état dominant (401) sur le bus (40), la transition de l'état dominant (401) à un état récessif étant en particulier un état SIC (403).

4. Station d'abonné (10 ; 30) selon l'une des revendications précédentes, avec en outre un bloc de commande de module de détection (141) destiné à commander le module de détection de tension de bus (14) de telle manière que la fin de la phase d'arbitrage (451) a lieu pendant la durée de détection prédéfinie (T_M1 ; T_M1, T_M2) et qu'un état dominant prévaut sur le bus (40).

5. Station d'abonné (10 ; 30) selon l'une des revendications précédentes,
le module de détection de tension de bus (14) comportant en outre un commutateur (142) et un élément de stockage (143), et
le bloc de commande de module de détection (141) étant configuré pour commander le commutateur (142) pour relier l'élément de stockage (143) au bus (40) pour détecter la tension de bus (Vcm) reçue du bus (40) par le dispositif d'envoi/de réception (12).

6. Station d'abonné (10 ; 30) selon l'une des revendications précédentes, avec en outre un module de fourniture (13) de tension de bus pour fournir deux tensions de polarisation de bus différentes (U2 ; U3),
le module de réglage de tension de bus (16) étant configuré pour régler une des deux tensions de polarisation de bus (U2 ; U3) différentes pour le dispositif d'envoi/de réception (12) sur la base de la tension de bus (Vcm) détectée par le module de détection de tension de bus (14) pendant la durée de détection prédéfinie (T_M1 ; T_M1, T_M2).

7. Station d'abonné (10 ; 30) selon la revendication 6, le module de fourniture (13) de tension de bus comportant un diviseur de tension avec six résistances (131...136) pour fournir les deux tensions de polarisation de bus (U2 ; U3) différentes.

8. Station d'abonné (10 ; 30) selon la revendication 6, le module de fourniture (13) de tension de bus comportant un semi-conducteur avec trois dérivées de bande interdite (131, 132 ; 133, 134 ; 135, 136) pour fournir les deux tensions de polarisation de bus (U2 ; U3) différentes.

9. Station d'abonné (10 ; 30) selon l'une des revendications précédentes, le module de réglage de tension de bus (16) comportant un commutateur inverseur (162) et un bloc de commande de module de réglage (161) pour commander la position du commutateur inverseur (162) sur la base de la tension de bus (Vcm) détectée par le module de détection de tension de bus (14) pendant la durée de détection prédéfinie (T_M1 ; T_M1, T_M2).

10. Station d'abonné (10 ; 30) selon l'une des revendications précédentes, la station d'abonné (10 ; 30) étant configurée pour négocier avec les autres stations d'abonné (10 ; 20 ; 30) du système de bus (1) pendant une première phase de communication (451) la station d'abonné des stations d'abonné (10 ; 20 ; 30), qui a un accès exclusif au bus (40) dans la deuxième phase de communication (452) suivante et est ainsi autorisée à envoyer son message (45 ; 46 ; 47).

11. Station d'abonné (10 ; 30) selon l'une des revendications précédentes, le dispositif d'envoi/de réception (12) étant configuré pour générer le signal différentiel analogique (CAN_H, CAN_L) dans une première phase de communication (451) du message (45) avec une couche physique (451_P) différente de celle d'une deuxième phase de communication (452).

12. Station d'abonné (10 ; 30) selon l'une des revendications précédentes,
avec en outre le module de détection d'événement (125) destiné à détecter un événement (E1 ; E2 ; E3), après lequel le module de détection de tension de bus (14) doit effectuer une détection de la tension de bus (Vcm) présente sur le bus (40),
le bloc de commande de module de détection (141) étant configuré pour piloter le module de détection de tension de bus (14) pour détecter la tension de bus (Vcm) présente sur le bus (40) pendant la durée de détection prédéfinie (T_M1 ; T_M1, T_M2 ; T_M3) après que le module de détection d'événement (125) a détecté l'événement (E1 ; E2 ; E3).

13. Station d'abonné (10 ; 30) selon la revendication 12, l'événement (E1) étant un nombre prédéfini de bits récessifs directement successifs à la fin (EOF) d'une trame (450) envoyée pour le message (45 ; 46 ; 47) par le bus (40).

14. Station d'abonné (10 ; 30) selon la revendication 12 ou 13 et en cas de dépendance à la revendication 10,
l'événement (E2) étant qu'à la fin de la première phase de communication (451), la station d'abonné (10 ; 20 ; 30), qui a l'accès exclusif au bus (40) dans la deuxième phase de communication (452) suivante et qui est ainsi autorisée à envoyer son message (45 ; 46 ; 47), est déterminée.

15. Station d'abonné (10 ; 30) selon l'une des revendications précédentes,
avec en outre un module de maintien (15) de tension de bus destiné à maintenir la tension de bus (Vcm) détectée sur le bus (40) par le module de détection de tension de bus (14), et
avec en outre en option un élément de stockage (19), qui est disposé entre le module de maintien (15) de tension de bus et le module de réglage de tension de bus (16) pour stocker une tension (U5) sur la sortie du module de détection de tension de bus (14).

16. Station d'abonné (10 ; 30) selon l'une des revendications précédentes, avec en outre un circuit d'attaque (17) de tension de bus pour attaquer la tension de polarisation de bus (U2 ; U3) réglée par le module de réglage de tension de bus (16) pour le dispositif d'envoi/de réception (12) sur le bus (40).

17. Station d'abonné (20) pour un système de bus (1) série, avec en outre un dispositif de commande de communication (11) destiné à commander la communication dans le système de bus (1) et à générer le signal d'envoi (TXD),
la station d'abonné (20) étant configurée pour la communication dans un système de bus (1), dans lequel un accès exclusif sans collision d'une station d'abonné (10, 20, 30) au bus (40) du système de bus (1) est garanti au moins temporairement.

18. Système de bus (1), avec
un bus (40), et
au moins deux stations d'abonnés (10, 20 ; 10, 30 ; 20, 30), lesquelles sont reliées l'une à l'autre par le bus (40), de telle manière qu'elles peuvent communiquer en série entre elles et parmi lesquelles au moins une station d'abonné (10, 20 ; 10, 30 ; 20, 30) est une station d'abonné (10 ; 30) selon l'une des revendications précédentes.

19. Procédé de communication avec des signaux différentiels (CAN_H, CAN_I) dans un système de bus (1) série, dans lequel une station d'abonné (10 ; 30) du système de bus (1) a un dispositif d'envoi/de réception (12) pour envoyer un signal d'envoi numérique (TxD) en tant que signal différentiel analogique (CAN_H, CAN_L) à un bus (40) du système de bus (1) pour envoyer un message (45 ; 46 ; 47) à au moins une autre station d'abonné (10 ; 20 ; 30) du système de bus (1) et/ou pour recevoir un signal analogique (CAN_H, CAN_L ; VDIFF) du bus (40), le procédé comportant les étapes coupure, avec un module de commutation (18), d'une tension de polarisation de bus (U2 ; U3) pour le bus (40) pendant une durée de détection prédéfinie (T_M1 ; T_M1, T_M2 ; T_M3),
détection, avec un module de détection de tension de bus (14), de la tension de bus (Vcm) reçue du bus (40) par le dispositif d'envoi/de réception (12) pendant la durée de détection prédéfinie (T_M1 ; T_M1, T_M2 ; T_M3), et réglage, avec un module de réglage de tension de bus (16), de la tension de polarisation de bus (U2 ; U3), sur une valeur de tension, qui résulte d'une détection effectuée par le module de détection de tension de bus (14) pendant la durée de détection prédéfinie (T_M1 ; T_M1, T_M2 ; T_M3).
